(19) Europäisches Patentamt
European Patent Office
Office européen des brevets

(11) EP 1 946 523 B1

(12) **FASCICULE DE BREVET EUROPEEN**

(45) Date de publication et mention de la délivrance du brevet:
**07.12.2016 Bulletin 2016/49**

(21) Numéro de dépôt: **06820178.9**

(22) Date de dépôt: **10.10.2006**

(51) Int Cl.:
***H04L 29/08*** *(2006.01)* ***H04L 29/06*** *(2006.01)*

(86) Numéro de dépôt international:
**PCT/FR2006/002272**

(87) Numéro de publication internationale:
**WO 2007/042661 (19.04.2007 Gazette 2007/16)**

(54) **PROCÉDÉ ET SERVEUR D'INVOCATION DES SERVEURS D'APPLICATION DANS UN RÉSEAU SIP**

VERFAHREN UND SERVER ZUM AUFRUFEN VON ANWENDUNGSSERVERN IN EINEM SIP-NETZWERK

METHOD AND SERVER FOR INVOKING APPLICATION SERVERS IN A SIP NETWORK

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **14.10.2005 FR 0510517**

(43) Date de publication de la demande:
**23.07.2008 Bulletin 2008/30**

(73) Titulaire: **Orange**
**75015 Paris (FR)**

(72) Inventeur: **CHADLI, Youssef**
**F-92200 Bagneux (FR)**

(74) Mandataire: **Cabinet Plasseraud**
**66, rue de la Chaussée d'Antin**
**75440 Paris Cedex 09 (FR)**

(56) Documents cités:
**US-A1- 2005 050 194 US-A1- 2005 190 772**

- **"3rd Generation Partnership Project; Technical Specification Group Core Network; IP Multimedia (IM) session handling; IM call model; Stage 2 (Release 5); 3GPP TS 23.218" ETSI STANDARDS, EUROPEAN TELECOMMUNICATIONS STANDARDS INSTITUTE, SOPHIA-ANTIPO, FR, no. V560, septembre 2003 (2003-09), XP014021930 ISSN: 0000-0001**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 946 523 B1

## Description

L'invention concerne un procédé et un serveur d'invocation, dans le cadre d'un appel, de logiques de service dans un environnement SIP, pour Session Initiation Protocol, ou tout autre environnement, lors de l'exécution d'un dialogue ou d'une transaction SIP, entre deux agents utilisateur d'un réseau, tel que le réseau IP.

D'une manière générale, on rappelle qu'un agent utilisateur est une entité logicielle, associée au modèle de référence OSI pour Open System Interconnection en anglais, représentant un utilisateur et qui assure les fonctions d'interface, de transfert et de stockage des messages qui émanent de cet utilisateur ou qui lui sont destinés.

En conséquence, un dialogue SIP est un échange de messages entre deux agents utilisateur, échange qui dure dans le temps. Un dialogue SIP contient un ensemble de transactions SIP. A chaque extrémité de l'échange, ce dernier est, entre autre, identifié par trois paramètres :

- « Local tag » : créé par cette extrémité elle-même, correspondant au « Remote tag » pour l'autre extrémité ;
- « Remote tag » : envoyé par l'autre extrémité;
- « Call-Id » : créé par l'extrémité ayant initié ce dialogue.

La recommandation RFC SIP d'origine, RFC 3261, ne prévoit que la méthode INVITE pour établir un dialogue entre deux agents utilisateurs. Suite à de nouvelles extensions, un dialogue peut être établi par l'intermédiaire d'autres messages tels que REFER, défini par la recommandation RFC 3515 ou SUBSCRIBE, défini par la recommandation RFC 3565.

Par convention, un dialogue SIP est dit entrant pour une entité UA constituant l'agent utilisateur d'extrémité de ce dialogue T_UA et un dialogue SIP est dit sortant pour une entité UA constituant l'agent utilisateur d'origine O_UA de ce dialogue.

Une transaction SIP est un échange requête/réponses entre deux agents utilisateur. Un agent utilisateur client transmet une requête à un agent utilisateur serveur, qui répond par un ensemble de réponses. Cet ensemble contient, le cas échéant, des réponses provisoires, et, toujours, une réponse finale, terminant la transaction.

Pour une transaction ou un dialogue SIP, l'agent utilisateur d'origine O_UA est l'agent SIP qui a engendré la requête initiant ce dialogue ou cette transaction SIP. L'agent précité peut être un terminal SIP ou un serveur SIP opérant en coupure, et se comportant en mode de fonctionnement B2BUA pour Back To Back User Agent en anglais.

Pour une transaction ou un dialogue SIP, l'agent utilisateur d'extrémité T_UA est l'agent qui a reçu la requête initiant ce dialogue ou cette transaction, et qui y a répondu. Cet agent peut également être un terminal SIP ou un serveur SIP en mode de fonctionnement B2BUA.

Une session présente un ou plusieurs flux média (données de nature diverses) entre plusieurs participants.

Les caractéristiques d'une session sont négociées par des échanges SDP, du type offre/réponse, tels que définis dans la recommandation IETF RFC 3264. A l'heure actuelle, la méthode INVITE précitée permet d'établir une session, et également un dialogue, une session correspondant à au moins un dialogue.

Un agent utilisateur opérant en mode B2BUA, tel que représenté en figure 1a, opère dans un mode de fonctionnement consistant à mettre dos à dos utilisateur UA Face, utilisateur UA Arrière, deux dialogues ou transactions différents, mais relatifs à un même échange, session ou transaction. Ce mode de fonctionnement permet à l'entité qui l'implémente de contrôler tous les aspects de l'appel ou de la communication.

A 1a réception d'une requête entrante venant de l'O_UA, A et destinée au T_UA, B, ainsi que représenté en figure 1a, cette entité agit comme si elle était le terminal ou agent utilisateur terminal destinataire T_UA, B. Elle reçoit donc tous les autres messages de l'O_UA, A destinés à B relatifs à la transaction ou au dialogue initié par cette requête. Ensuite, elle engendre une autre requête qu'elle envoie en direction de la destination réelle, en opérant comme si elle était le terminal ayant envoyé la première requête. Elle reçoit en outre tous les autres messages du terminal destinataire T_UA, B, destinés au terminal d'origine O_UA, A, relatifs à la transaction ou au dialogue initié(e) par cette requête. L'entité opérant en mode B2BUA reste ainsi en coupure de tous les messages de signalisation SIP échangés entre l' O_UA, A, et le T_UA, B, concernant le dialogue ou la transaction initiée par A.

On rappelle également qu'un serveur proxy SIP est un serveur relais chargé de router les messages SIP. Ce type de serveur a uniquement un rôle dans la signalisation, mais ne gère pas de média. Il n'est en général à l'origine d'aucune requête, excepté une requête CANCEL permettant de libérer une session.

Enfin, un serveur d'application SIP est un serveur hébergeant une ou plusieurs logiques de service. La notion de service recouvre ici tout mécanisme de transport des informations pour les couches du modèle OSI. Le serveur d'application fournit un environnement d'exécution à la logique de service. Une logique de service est donc une application logicielle destinée à fournir un service donné, en agissant sur la signalisation SIP.

A l'heure actuelle, seul le Groupement 3GPP, pour Third Génération Partnership Project Agreement en anglais, a, dans le cadre de l'IMS pour IP Multimedia Subsystem défini un mécanisme permettant à un proxy SIP, désigné S-CSCF, d'invoquer par appel une ou plusieurs logiques de service au début d'un dialogue ou une transaction SIP, de façon à pouvoir développer des logiques de service sur des serveurs séparés du serveur d'appel. Cette approche reprend ainsi un des objectifs du Réseau Intelligent.

En référence à la figure 1b, selon le mécanisme précité, une logique de service SL est hébergée dans un serveur d'application AS qui fournit à cette dernière un environnement d'exécution.

Le mécanisme précité repose sur une interface SIP basée sur le protocole SIP entre le proxy SIP, S-CSCF, et avec le serveur d'application AS, pour continuer ou terminer la session.
Le proxy S-CSCF héberge les IFC pour (initial Filter Criteria) lui permettant de savoir si une requête initiale doit être envoyée à un AS donné ou non. Un IFC contient entre autres

- L'adresse URI (Universal Ressourse Identifier) de l'AS concerné par l'IFC

  - Critère de condition, TP, pour Trigger Point en anglais : détermine le ou les critères que doit satisfaire la requête SIP pour qu'elle soit transférée au serveur d'application AS spécifié dans l'IFC. Ces critères ne s'appliquent ni sur les requêtes appartenant à un dialogue SIP déjà établi ni sur les réponses. Ils s'appliquent uniquement sur les requêtes initiant un dialogue (INVITE, SUBSCRIBE, ...) ou sur les requêtes n'établissant pas de dialogue (OPTIONS, REGISTRER, MESSAGE,...).

Les critères de condition TP peuvent porter sur, le nom de la méthode, la présence, l'absence ou le contenu d'un en tête quelconque, connu ou non, contenu de la Request-URI, direction de la requête provenant ou destinée à un utilisateur enregistré, requête destinée à un utilisateur non enregistré, informations contenues dans le corps SDP pour Session Description Protocol en anglais.

Le profil de service est téléchargé par le proxy S-CSCF lors de l'enregistrement de l'utilisateur.

La procédure d'invocation d'un serveur d'application AS par le proxy S-CSCF est alors la suivante : lorsqu'une requête initiale atteint le proxy S-CSCF, ce dernier vérifie d'abord que l'utilisateur n'est pas interdit. En l'absence d'interdiction, la procédure est poursuivie vers le serveur d'application AS, grâce à l'utilisation de critères de filtrage iFC par le S-CSCF, lequel peut décider si un ou plusieurs serveurs d'application doivent être invoqués, suite à la réception d'une requête SIP initiale.

L'invocation d'un serveur d'application AS consiste, simplement, en la transmission de cette requête vers ce dernier.

Les critères de filtrage iFC sont stockés dans le serveur gérant les profils utilisateur HSS pour Home Subscriber Server en anglais et sont définis pour chaque utilisateur. Les filtres correspondants sont utilisés statiquement et téléchargés par le proxy S-CSCF au moment de l'enregistrement de l'utilisateur, lors de la connexion au réseau.

Le serveur gérant les profils utilisateur HSS associe pour chaque identité publique d'un terminal utilisateur un profil de service. Ce profil peut contenir une ou plusieurs descriptions de critères de filtrage désignés iFC pour Initial Filter Criteria en anglais.

Les critères de filtrage iFC actuels contiennent les paramètres, données ou structures de données principales ci-après :

- priorité PR : priorité des critères de filtrage iFC par rapport aux autres critères de filtrage ;
- paramètres du serveur d'application AS :

  o Nom du serveur SN : spécifie l'URI pour Uniform Ressource Identification en anglais, désignation du serveur d'application AS qui doit être invoqué lorsque la condition de filtrage est satisfaite ;
  o Traitement de défaut DH : spécifie le traitement que doit subir la requête par le proxy S-CSCF, continuer ou arrêter la session correspondante, dans le cas où ce dernier ne peut établir la connexion de la façon suivante : s'il s'agit d'une requête d'enregistrement REGISTER, le proxy S-CSCF vérifie tous les critères iFC et envoie un message d'accord Third-Party REGISTER, selon la spécification technique TS 29228 à chaque serveur d'application AS dont les conditions de filtrage ont été satisfaites.

Pour toutes les requêtes initiales distinctes de la méthode correspondant à la requête REGISTER, le proxy S-CSCF procède de la manière ci-après :

1) Installation de la liste des critères iFC pour cette requête selon leur priorité. L'ordre des critères iFC n'est pas changé jusqu'à ce que la requête quitte définitivement le proxy S-CSCF, lequel pointe sur le premier critère iFC de la liste ;
2) Vérification de la satisfaction de la requête aux critères du iFC pointé.

   a) Dans l'affirmative, le proxy S-CSCF :

i) Ajoute un champ "P-Original-Dialog" qui lui permettra de reconnaître la requête retournée par le serveur d'application AS, même si son identifiant de dialogue a été changé par ce dernier ;
ii) Ajoute l'URI du serveur d'application AS spécifié par le critère iFC en tête du champ Route, suivie par sa propre URI, puis expédie la requête à ce serveur d'application AS. Ce dernier exécute la logique de service, peut modifier la requête et l'envoyer de nouveau au proxy S-CSCF. La requête envoyée au proxy S-CSCF doit avoir la même référence dialogue "P-Original-Dialog".
iii) Sur nouvelle réception de la requête du serveur d'application AS, le proxy S-CSCF passe à l'étape 3 suivante.

b) Dans la négative, le proxy S-CSCF passe à l'étape 3 suivante.

3) Si le critère iFC pointé n'est pas le dernier dans la liste, le proxy S-CSCF déplace le pointeur sur le critère iFC suivant et repasse à l'étape 2. Sinon, il passe à l'étape 4 suivante.
4) Routage de la requête selon un routage SIP normal, selon la recommandation RFC 3261.

La procédure décrite ci-dessus est celle donnée par la spécification 3GPP. Le pointeur est utilisé uniquement pour faciliter l'explication, mais son implémentation dans le S-CSCF n'est pas indispensable.

Si un serveur d'application AS décide de terminer localement une requête et renvoie une réponse finale pour cette requête, par l'intermédiaire de l'interface ISC, pour pour IP multimédia Subsystem Service Control Interface en anglais, au proxy S-CSCF, ce dernier abandonne la vérification des autres critères iFC restants. Cette réponse inclut le champ "P-Original-Dialog" que le proxy S-CSCF avait introduit dans la requête dans l'étape 3a)i), afin que ce dernier puisse faire la corrélation entre les deux messages.

Suite à la réception d'une requête du proxy S-CSCF le serveur d'application AS peut se comporter selon les trois façons ci-après, selon la logique de service exécutée, en référence aux figures 1c, 1d et 1e, dans lesquelles C_ID désigne un identifiant de dialogue ou de transaction SIP.

- En tant qu'agent utilisateur d'extrémité T_UA ou serveur de redirection, figure 1c : dans ce mode de fonctionnement, le serveur d'application AS agit en tant qu'agent utilisateur d'extrémité terminant la transaction SIP ou comme serveur de redirection du dialogue SIP#1.
- En tant que proxy SIP, figure 1d : dans ce cas, la requête SIP est transférée par le proxy S-CSCF au serveur d'application AS. Ce dernier peut modifier certains en-têtes contenus dans cette requête, conformément aux règles définies par l'IETF pour Internet Engineering Task Force dans la recommandation RFC 3261, puis retourner cette dernière au proxy S-CSCF qui la transfère au noeud suivant, le dialogue SIP#1 étant transmis sans changer son identifiant de dialogue.
- En tant qu'agent utilisateur B2BUA, figure 1e : dans ce mode de fonctionnement, le serveur d'application AS termine la requête SIP transférée par le proxy S-CSCF, agit comme un agent utilisateur d'extrémité T_UA, et engendre une nouvelle requête, en agissant en tant qu'agent utilisateur d'origine O_UA, initiant un dialogue SIP différent #2, qu'il envoie au proxy S-CSCF.

La technique antérieure précitée donne satisfaction, mais elle présente les inconvénients ci-après, lesquels seront donnés à seul titre d'exemple relativement à des services relatifs à des applications conversationnelles mais concerne, en général, tous les types de services d'application, multimédia utilisant le protocole SIP.

1) Le déclenchement des services ne peut se faire que sur la première requête initiant la session ou la transaction. Ainsi, un serveur d'application AS nécessitant un déclenchement sur une réponse à la requête initiale ou sur une requête pouvant être envoyée dans le dialogue initié par cette requête doit être invoqué sur la réception de cette requête. Les exemples suivants illustrent ce problème dans les situations ci-après :

Invocation du service de renvoi sur non réponse

Ce service devrait être déclenché sur la réception d'une réponse SIP "180 Ringing" à la requête INVITE, non suivie de la réponse d'acceptation "200 OK" ou d'une libération de l'appel dans un temps défini. En utilisant le mécanisme d'invocation de l'art antérieur précité, le serveur d'application gérant ce service doit être invoqué dès l'arrivée de la première requête INVITE initiant l'appel. En raison du faible pourcentage des appels renvoyés sur non réponse, le serveur d'application AS précité sera invoqué, dans la plupart des cas, sans qu'il n'ait toutefois besoin de déclencher le service. Ceci entraîne une prolongation du délai d'établissement d'appel et une surcharge inutile du serveur d'application AS.

Un problème identique se pose pour l'invocation des services suivants:

CRBT pour Coulored Ring Back Tone en anglais :

Ce service nécessite un déclenchement sur réception de la réponse "180 Ringing" à la requête INVITE initiant l'appel.

Indication d'Appel en Instance, IAI :

Ce service peut être déclenché sur réception d'une requête SIP à la requête INVITE initiale indiquant que l'appel a été présenté en instance. Cette indication peut être contenue soit dans un en-tête comme l'en-tête "Alert-Info", soit dans la description SDP pour Session Description Protocol en anglais.

Action sur Non Réponse :

Ce service peut être déclenché sur le même critère de déclenchement que celui du service "renvoi sur non réponse".

Transfert d'appel :

Ce service peut être déclenché sur réception de la requête REFER au sein d'un dialogue existant.

Mise en Attente (HOLD):

Ce service peut être déclenché sur réception d'une requête re-INVITE, au sein d'un dialogue existant, contenant une offre SDP indiquant que le terminal distant doit être mis en attente.

Renvoi sur occupation :

Ce service peut être déclenché sur réception de la réponse "486 Busy Here" ou de la réponse "600 Busy Evrywhere" à la requête INVITE initiale.

La majorité des services nécessitant un déclenchement sur un message différent de la requête initiale nécessitent un comportement du serveur d'application AS en mode B2BUA. C'est en particulier le cas des services précités.

2) Les critères de déclenchement actuels ne tiennent pas compte de l'état du terminal demandé, libre, occupé au degré N, alerté, etc. Ainsi, il n'est pas possible d'invoquer un serveur d'application AS, suite à la réception d'une requête INVITE destinée à un terminal usager occupé au premier degré. C'est pourquoi, la mise en oeuvre du service du Double Appel au niveau d'un serveur d'application AS nécessite l'introduction de celui-ci, dès le début de tout appel destiné a l'usager concerné. Etant donné le faible pourcentage des situations de "Double Appel", le serveur d'application AS sera invoqué, dans la plupart des cas, sans qu'il ne soit nécessaire de déclencher le service. Ceci entraîne une prolongation du délai d'établissement d'appel et une surcharge inutile du serveur d'application AS précité.

3) Tous les services, nécessitant un comportement du serveur d'application AS en mode B2BUA ou en mode "Proxy dialogue statefull", nécessitent en outre que le serveur d'application AS conserve ce comportement jusqu'à la fin de l'appel. Pour tous les services mentionnés précédemment, concernés par le mode précité, les serveurs d'application AS doivent être impliqués dans tous les appels destinés aux abonnés concernés, du début jusqu'à la fin de l'appel. En conséquence, dans la majorité des cas, les serveurs d'application AS fournissant ces services vont être impliqués du début jusqu'à la fin de l'appel, sans que le service ne soit déclenché.

Le document US 2005/190772 décrit un serveur d'invocation sélective permettant d'ouvrir deux dialogues distincts entre un agent utilisateur d'extrémité et un agent utilisateur d'origine. Ce processus ne permet aucunement de procéder ni à l'invocation du serveur d'application uniquement lorsque la logique de service hébergée doit être déclenchée, ni à la possibilité de sortir de l'appel à tout moment. ni de réduire le délai d'établissement d'appel et la charge de chaque serveur d'application, ce qui empêche une argumentation corrélative de la capacité effective de traitement de chacun d'eux.

La présente invention a pour objet de remédier aux inconvénients de la technique antérieure telle que décrite précédemment, inhérents au mécanisme de déclenchement, non seulement dans le domaine des applications conversationnelles mais également dans tout domaine d'application multimédia.

L'invention est définie dans les revendications indépendantes 1, 11 et 14. En particulier, un objet de la présente invention est la mise en oeuvre d'un procédé et d'un système permettant l'invocation d'un serveur d'application uniquement lorsque la logique de service hébergée par ce dernier doit être déclenchée. A titre d'exemple, le serveur d'application AS fournissant le service "Transfert d'appel" dans le cadre de la gestion d'appel en téléphonie IP, mobile ou fixe par exemple, ne sera invoqué que lorsque l'usager invoque ce service, c'est-à-dire lorsque le proxy S-CSCF reçoit la requête REFER dans le dialogue SIP d'appel concerné.

Un autre objet de la présente invention est la mise en oeuvre d'un procédé et d'un système d'invocation d'un serveur d'application AS permettant à tout serveur d'application invoqué de sortir de l'appel à tout moment, contrairement à la technique de l'art antérieur.

Un autre objet de la présente invention est la mise en oeuvre d'un procédé et d'un système d'invocation d'un serveur d'application opérant sur des critères de déclenchement prenant en compte l'état du terminal demandé.

Un autre objet de la présente invention est en conséquence la mise en oeuvre d'un procédé et d'un système d'invocation d'un serveur d'application grâce auxquels tout serveur d'application n'étant invoqué que lorsque le service doit être effectivement rendu, d'une part, mais pouvant sortir du dialogue lorsque la logique de service est exécutée, d'autre part, le délai d'établissement d'appel est réduit et chaque serveur d'application est en conséquence moins chargé, ce qui permet d'augmenter la capacité effective de traitement de ces derniers.

Le procédé d'invocation d'au moins un serveur d'application de service, lors d'une communication entre un agent utilisateur d'origine et un agent utilisateur d'extrémité, objet de l'invention, est remarquable en ce qu'il comprend au moins les étapes consistant à ouvrir deux dialogues distincts, ces dialogues comprenant des messages, entre une fonction d'invocation sélective de service et, respectivement, l'agent utilisateur d'origine et l'agent utilisateur d'extrémité, la fonction d'invocation sélective de service se substituant à l'agent utilisateur d'extrémité dans son dialogue avec l'agent utilisateur d'origine et à l'agent utilisateur d'origine dans son dialogue avec l'agent utilisateur d'extrémité , mémoriser les messages provenant des agents utilisateurs lors des deux dialogues ouverts, vérifier au moins un critère de déclenchement conditionnel de service sur les deux dialogues, et, si le critère de déclenchement est vérifié, restituer au moins en partie les messages mémorisés au serveur d'application de service, afin de déclencher l'invocation de celui-ci.

Le procédé objet de l'invention est en outre remarquable en ce que la fonction d'invocation sélective de service comporte en outre l'interprétation d'un message SIP d'arrêt envoyé par tout serveur d'application demandant à être retiré d'un appel.

Le procédé objet de l'invention est en outre remarquable en ce que le ou les critère(s) de déclenchement conditionnel de service inclut(ent) la réception d'une réponse à une requête initiale, l'expiration d'un délai de temporisation, mesurant la durée entre la réception d'une réponse provisoire et la non réception d'une réponse définitive, la réception d'une requête reçue dans un dialogue confirmé, la réception d'une requête reçue dans un dialogue non confirmé et l'état de l'agent utilisateur d'extrémité.

Il sera mieux compris à la lecture de la description et à l'observation des dessins ci-après dans lesquels, outre les figures 1a à 1e relatives à l'art antérieur,

- la figure 2a représente, à titre illustratif, un organigramme des étapes de mise en oeuvre du procédé objet de la présente invention ;
- la figure 2b et la figure 2c représente, à titre illustratif, un premier et un deuxième schéma spécifique d'implantation des organes de mise en oeuvre du procédé objet de la présente invention ;
- la figure 3 représente, à titre illustratif, une description des extensions des critères de filtrage, sous forme de critères de filtrage de déclenchement conditionnel de service, permettant la mise en oeuvre du procédé objet de la présente invention ;
- la figure 4a représente, à titre illustratif, l'application du procédé objet de l'invention à une requête subséquente, appartenant à un dialogue SIP existant ;
- la figure 4b représente, à titre illustratif, l'application du procédé objet de l'invention à une réponse SIP à la requête SIP initiale ;
- la figure 4c représente, à titre illustratif, l'application du procédé objet de l'invention à une réponse SIP à la requête SIP initiale invoquant deux serveurs d'application de service AS ;
- la figure 5a représente, à titre illustratif, un organigramme des étapes mises en oeuvre par le procédé objet de l'invention, par l'intermédiaire de la fonction d'invocation sélective de service, opérant en mode transparent vis-à-vis du mode 3GPP, dans le cas spécifique où le message SIP reçu par cette dernière n'appartient pas à un dialogue SIP existant, ce message SIP correspondant soit à une requête initiale initiant un dialogue SIP soit à une requête initiale n'initiant pas un dialogue SIP ;
- la figure 5b représente, à titre illustratif, un organigramme des étapes mise en oeuvre par le procédé objet de l'invention par l'intermédiaire de la fonction d'invocation sélective de service, opérant en mode transparent vis-à-vis du mode 3GPP, dans le cas spécifique, complémentaire de la figure 5a, où le message SIP reçu par cette fonction appartient à un dialogue SIP existant ;
- les figures 6a, 6b et 6c représentent, de manière détaillée, un processus d'échange de messages SIP entre la fonction d'invocation sélective de service et le serveur d'application, lorsque ce dernier opère soit en mode agent utilisateur terminal, soit en mode proxy, ou encore en mode B2BUA et que le message SIP reçu initie un dialogue SIP, selon la figure 5a;

- les figures 7a et 7b représentent de manière détaillée le processus d'échange de messages SIP entre la fonction d'invocation sélective de service et le serveur d'application et d'action exécuté par cette dernière, lorsque le message SIP appartient à un dialogue SIP existant selon la figure 5b et que le serveur d'application opère en mode B2BUA ;
- les figures 8a et 8b représentent de manière détaillée, le processus d'échange de messages SIP entre la fonction d'invocation sélective de service et le serveur d'application et d'actions exécuté par cette dernière, lorsque le message SIP appartient à un dialogue SIP existant selon la figure 5b et que le serveur d'application opère en mode proxy ;
- la figure 9 représente, à titre illustratif, un exemple d'exécution du procédé objet de l'invention sous forme d'un schéma spatio-temporel, pour un service fourni par un serveur d'application de service se déclenchant sur réception par la fonction d'invocation sélective de service d'une réponse "180 Ringing" à une requête INVITE de protocole SIP, lorsque cette fonction d'invocation sélective de service opère en mode transparent selon les figures 5a et 5b;
- la figure 10a représente, à titre illustratif, un organigramme des étapes mises en oeuvre par le procédé objet de l'invention, par l'intermédiaire de la fonction d'invocation sélective de service opérant en un mode simplifié, non transparent vis-à-vis du mode 3GPP, dans lequel le nombre de messages SIP échangés est réduit ;
- les figures 10b et 10c représentent, à titre illustratif, de manière détaillée le processus d'échange de messages SIP entre la fonction d'invocation sélective de service et le serveur d'application, lorsque le dialogue transmettant le message SIP incitateur est un dialogue entrant respectivement un dialogue sortant ;
- la figure 11 représente, à titre illustratif, un exemple d'exécution du procédé objet de l'invention, sous forme d'un schéma spatio-temporel, pour un service fourni par un serveur d'application de service se déclenchant sur réception par la fonction d'invocation sélective de service d'une réponse "180 Ringing" à une requête INVITE, du protocole SIP, lorsque cette fonction d'invocation sélective de service opère en mode non transparent ;
- les figures 12a, 12b et 12c représentent, à titre illustratif, un processus préférentiel de désengagement d'un serveur d'application évoqué antérieurement à la fin d'un appel d'un agent utilisateur, conformément au procédé objet de l'invention ;
- la figure 13 représente, à titre illustratif, un serveur d'invocation de serveurs d'application conforme à l'objet de la présente invention.

Une description plus détaillée du procédé d'invocation d'un serveur d'application de services par un serveur d'appel SIP, conforme à l'objet de la présente invention sera maintenant donnée en liaison avec la figure 2a et les figures suivantes.

Le procédé objet de l'invention est mis en oeuvre dans un environnement SIP et, en particulier, d'un serveur d'appel S-CSCF comportant des critères de filtrage iFC de type classique dans le cadre d'un appel de type SIP et utilisant en outre des critères de filtrage étendus pour prendre en compte les nouvelles conditions de déclenchement.

En outre, selon un aspect remarquable du procédé objet de l'invention, celui-ci consiste à appliquer au moins un critère de filtrage de déclenchement conditionnel de service SIC incluant l'état de l'agent utilisateur d'un terminal abonné demandé lorsque le déclenchement est exécuté sur une requête initiale et à déclencher une fonction d'invocation sélective de service notée SIF(iFC+SIC), IFC étendu, incluant au moins la vérification des critères de décle..nchement applicables à un agent utilisateur en fonction de sa position d'appelant, respectivement d'appelé.

La fonction d'invocation sélective de service SIF reçoit toutes les requêtes SIP initiales notées IR_SIP destinées à ou en provenance des agents utilisateurs des terminaux abonnés concernés. Elle permet l'invocation d'au moins un serveur d'application de services AS, en fonction de l'état de l'agent utilisateur du terminal d'abonné demandé.

En outre, selon un mode opératoire remarquable du procédé objet de l'invention représenté en figure 2a, lors d'une communication entre un agent utilisateur d'origine O_UA et un agent utilisateur d'extrémité T_UA, ce procédé pour l'invocation d'un serveur d'application de service, inclut au moins les étapes consistant à ouvrir deux dialogues distincts, ces dialogues comprenant des messages entre la fonction d'invocation sélective de services SIF et, respectivement, l'agent utilisateur d'origine O_UA et l'agent utilisateur d'extrémité T_UA. La fonction d'invocation sélective de service SIF se substitue ainsi à l'agent utilisateur d'extrémité T_UA dans son dialogue avec l'agent utilisateur d'origine O_UA respectivement à l'agent utilisateur d'origine O_UA dans son dialogue avec l'agent utilisateur d'extrémité T_UA. L'étape A est suivie d'une étape B consistant à mémoriser les messages provenant des agents utilisateurs O_UA et T_UA lors des deux dialogues ouverts et d'une étape C consistant à vérifier au moins un critère de déclenchement conditionnel de service sur les deux dialogues. Si le critère de déclenchement est vérifié, une étape D consistant à restituer au moins en partie les messages mémorisés au serveur d'application de service AS, afin de déclencher l'invocation de celui-ci.

Ainsi qu'on l'a représenté en figure 2b, le procédé, objet de la présente invention, de manière particulièrement avantageuse consiste à exécuter le critère de filtrage de déclenchement conditionnel et la fonction d'invocation sélective de service SIF dans le serveur d'appel SIP, lequel peut alors être constitué par un proxy S-CSCF. Dans ce cas ce processus peut remplacer le mécanisme antérieur basé sur les iFC.

En variante, ainsi que représenté en figure 2c, le procédé, objet de l'invention, peut avantageusement consister à exécuter la fonction d'invocation sélective de service SIF dans un serveur d'application spécifique, noté SUPER AS, lequel est alors interconnecté au serveur d'appel SIF par l'intermédiaire d'une interface ISC selon les normes du 3GPP. L'interface ISC est basée sur le protocole SIP.

D'une manière plus particulière, on indique que les critères de filtrage de déclenchement conditionnel de service SIC incluent en outre avantageusement :

- la réception d'une réponse à une requête initiale ;
- l'expiration d'un délai de temporisation encore désigné "timer" mesurant la durée entre la réception d'une réponse provisoire et la non réception d'une réponse définitive ;
- la réception d'une requête reçue dans un dialogue SIP confirmé ;
- la réception d'une requête reçue dans un dialogue SIP non confirmé.
- Etat du terminal demandé.

Enfin, la fonction d'invocation sélective de service SIF comprend en outre avantageusement :

- l'ouverture et la gestion des dialogues SIP avec un serveur d'application AS ;
- la corrélation entre dialogues SIP entre la fonction d'invocation sélective de service et tout serveur d'application AS d'une part et les dialogues SIP entre la fonction d'invocation sélective de service SIF et tout agent utilisateur SIP d'un terminal abonné appelant A ou appelé B, ou d'un serveur réseau se comportant en agent utilisateur, d'autre part ;
- la mémorisation de tout dialogue SIP spécifique en vue de la restitution ultérieure de ce dernier, le cas échéant, à un serveur d'application AS lorsqu'un critère de filtrage de déclenchement conditionnel de service est vérifié.
- La fonction SIF agit en mode B2BUA pour tout dialogue SIP susceptible de déclencher un service sur une réponse ou une requête subséquente. C'est ce qui lui permet de:

    o Recevoir tous les messages SIP relatifs à ce dialogue ;
    o Pouvoir insérer un AS dans l'appel ou la communication en dehors de la requête initiale, ce qui n'était pas possible avec les processus antérieurs.

Enfin, et selon un aspect remarquable du procédé, objet de la présente invention, la fonction d'invocation sélective de service SIF comporte en outre avantageusement l'interprétation d'un message SIP d'arrêt envoyé par tout serveur d'application demandant à être retiré d'un appel entre le terminal abonné appelant A et le terminal abonné appelant B par l'intermédiaire de leurs agents utilisateurs, ainsi qu'il sera décrit ultérieurement dans la description.

Sur la figure 3 on a représenté, à titre illustratif, une description en langage UML pour Universal Markup Language de la déclaration des critères de filtrage de déclenchement conditionnel de service SIC en liaison avec la déclaration de l'art antérieur des critères de filgrage iFC, l'ensemble de ces déclarations étant établies selon un lien hiérarchique fonctionnel permettant l'appel des critères précités, lors de la mise en oeuvre par la fonction d'invocation sélective de service SIF.

Ainsi, sur la figure 3, les indications portées en écriture droite correspondent à des indications représentant les spécifications des critères de filtrage iFC classiques et les indications portées en écriture italique correspondent à des indications permettant la mise en oeuvre et l'appel des critères de filtrage de déclenchement conditionnels de service SIC, iFC étendu.

Parmi les critères précités on note :

- Applicabilité : type énuméré pouvant prendre les valeurs suivantes :

    ◦ initialRequest pour requête initiale : le filtre est applicable aux requêtes initiales IR_SIP ;
    ◦ subsequentRequest : le filtre est applicable aux requêtes subséquentes ;
    o Response : le filtre est applicable aux réponses à la requête initiale.

- RequestedContext pour contexte requis : type énuméré pouvant prendre les valeurs suivantes :

    ◦ SIPdialog : indique que le serveur d'application AS souhaite recevoir uniquement les informations liées au dialogue SIP lorsque ce dernier est invoqué ;
    ◦ SIPSession : indique que le serveur d'application AS souhaite recevoir les informations liées au dialogue SIP et à la session média, c'est-à-dire négociation de type SDP lorsque ce serveur d'application est invoqué ;

- CalleeState pour état appelé : permet de prendre en compte l'état de l'appelé :

◦ 0 : appelé libre ;
◦ x (> 0) : appelé occupé au degré x.

- Response Code pour code réponse :

◦ Code : indique le code de la réponse SIP lorsque le filtre est applicable aux réponses SIP à la requête initiale ;
◦ Timer pour délai : permet de prendre en compte la durée entre la réception d'une réponse provisoire et la non réception de la réception d'une réponse définitive.

- Dialog State pour état dialogue :

◦ Dialog: type énuméré pouvant prendre les valeurs suivantes confirmé ou non confirmé, cette variable permettant de prendre en compte l'état du dialogue SIP lorsque le filtre est applicable aux requêtes subséquentes.

En raison du fait que les critères de filtrage de déclenchement conditionnel de service SIC peuvent être appliqués au message SIP, noté M_SIP, à différents niveaux du dialogue SIP, différentes possibilités existent pour ce qui concerne l'applicabilité des critères précités au message M_SIP.

Selon une première solution, les critères de filtrage de déclenchement conditionnel de service sont applicables uniquement aux requêtes SIP dont le noeud suivant de transmission n'est pas un serveur d'application AS géré par la fonction d'invocation sélective de service SIF, aux réponses SIP à la requête initiale ne provenant pas d'un serveur d'application AS géré par la fonction d'invocation sélective de service SIF et aux réponses SIP provenant d'un serveur d'application AS qui vient d'être invoqué.

Ainsi, dans cette première solution, un serveur d'application AS invoqué, suite à la réception d'un message appartenant à un dialogue ainsi que représenté en figure 4a, est inséré toujours après les éventuels autres serveurs d'application AS1 et AS2 invoqués antérieurement. Le serveur invoqué ici est le serveur AS3 ainsi que représenté sur la figure 4a.

La figure 4a représente l'application des critères de filtrage de déclenchement conditionnel de service SIC à une requête sortante, c'est-à-dire en réponse à la requête initiale reçue par la fonction d'invocation sélective de service SIF.

Dans cette situation, les critères de filtrage des déclenchements conditionnels de service SIC permettent l'invocation du serveur d'application AS3, suite à l'application d'un critère de filtrage de déclenchement conditionnel de service SIC à la réponse SIP reçue du proxy SIP précédent.

Enfin, en référence à la figure 4c, on a représenté l'application des critères de filtrage de déclenchement conditionnel de service SIC à une réponse SIP entrante où deux serveurs d'application S3 et S4 sont invoqués.

L'invocation précitée est effectuée en réponse à la requête initiale par exemple, constituant donc une réponse entrante. L'invocation du serveur d'application AS3 suite à l'application d'un critère de filtrage de déclenchement conditionnel de service SIC à la réponse SIP reçue du proxy SIP précédent est effectuée, ainsi que représenté en figure 4c, puis l'invocation du serveur d'application AS4 suite à l'application d'un critère de filtrage de déclenchement conditionnel de service SIC à la réponse SIP reçue du serveur d'application AS3 après son invocation.

Selon une deuxième solution, les critères de filtrage de déclenchement conditionnel de service SIC sont applicables à tous les messages pouvant déclencher l'invocation d'un serveur d'application AS.

Selon cette deuxième solution, un serveur d'application AS, suite à la réception d'un message appartenant à un dialogue SIP, peut être inséré avant un serveur d'application AS invoqué précédemment. Sur la figure 4d on a représenté l'invocation du serveur AS3 avant le serveur AS2 invoqué précédemment sur réponse d'un message M_SIP appartenant à un dialogue. L'invocation du serveur d'application AS3 est effectuée suite à l'application d'un critère de filtrage de déclenchement conditionnel de service SIC au message M_SIP reçu.

La deuxième solution précitée permet ainsi à tout serveur d'application invoqué suite à la réception d'un message appartenant à un dialogue SIP d'être inséré dans ce dialogue, selon une relation d'ordre antérieurement à un serveur d'application invoqué dans ce dialogue précédemment.

Une description plus détaillée de la mise en oeuvre de la fonction d'invocation sélective de service SIF dans un mode opératoire transparent vis-à-vis de tout serveur d'application AS opérant chacun selon un comportement standard, suivant les normes IETF et 3GPP, sera maintenant donnée en liaison avec les figures 5a, 5b et 6a, 6b, 6c, 7a, 7b, 8a et 8b.

Dans le mode transparent, la fonction d'invocation sélective de service SIF restitue au serveur d'application AS les messages mémorisés en simulant un dialogue réel entre l'agent utilisateur d'origine et l'agent utilisateur d'extrémité.

Le mode de mise en oeuvre précité de la fonction d'invocation sélective de service SIF implique la mise en oeuvre d'une fonctionnalité de relais d'un message SIP reçu dans un premier dialogue, ce relais étant effectué dans un deuxième dialogue et indiquant que la fonction d'invocation sélective de service SIF avant de renvoyer ce message, modifie tous les en-têtes contenant des informations relatives au dialogue SIPX, en-têtes tels que "FROM Tag", "To Tag", Call-id, Cseq, Contact, Route, Record Route, Via, de telle façon que le message envoyé, et donc relayé, corresponde à un message engendré par l'agent utilisateur UA exécutant également le deuxième dialogue relayé.

Le principe de ce mode opératoire transparent est ainsi basé sur l'implication de la fonction d'invocation sélective de service SIF en mode B2BUA dans tous les dialogues impliquant des abonnés possédant un ou plusieurs services fournis par les serveurs d'application gérés par la fonction d'invocation sélective de service SIF précitée et dont le déclenchement ne se fait pas sur la requête initiale.

La fonction d'invocation sélective de service SIF possède ainsi les critères de filtrage de déclenchement conditionnel de service SIC de chaque abonné concerné. Ces critères peuvent être téléchargés en particulier sur connexion d'un terminal abonné considéré pour ainsi exécuter l'établissement des critères de filtrage de déclenchement conditionnel de service SIC précités.

Si, au cours du dialogue SIP, un critère de filtrage de déclenchement conditionnel de service SIC est satisfait, alors la fonction d'invocation sélective de service SIF invoque le serveur d'application AS concerné et lui retransmet tous les messages SIP relatifs à ce dialogue SIP d'une manière à lui permettre d'être inséré dans ce dialogue.

On considère, en référence à la figure 5a, la situation de réception de message SIP par la fonction d'invocation sélective de service SIF en dehors de la phase d'invocation d'un serveur d'application AS.

La fonction d'invocation sélective de service SIF vérifie si un ou plusieurs critères de filtrage de déclenchement conditionnel de service SIC existent pour ce message. L'on suppose alors qu'on dispose des critères de filtrage $SIC = \{SIC_j\}_{j=1}^{j=J}$. Le message M_SIP est considéré dans son contexte : par exemple, lorsque la fonction d'invocation sélective de service SIF reçoit une réponse 200 à une requête INVITE du protocole SIP, seul les critères de filtrage de déclenchement conditionnel de service SIC concernant cette réponse sont considérés.

Ainsi que représenté sur la figure 5a, si le message M_SIP est une requête initiale, cette condition étant vérifiée au test 100 par le test M_SIP=IR? où IR désigne une requête initiale provenant d'un agent utilisateur d'un terminal abonné A ou transmise par un serveur réseau se comportant en mode B2BUA ou en tant qu'agent utlisateur et destiné à l'agent utilisateur d'un terminal abonné B pour laquelle aucun critère de filtrage de déclenchement conditionnel de service SIC n'existe, SIC=Ø, mais initiant un dialogue SIP pouvant déclencher un service géré par la fonction d'invocation sélective de service SIF, cette condition étant vérifiée au test 101, cette dernière agit alors en mode B2BUA. La fonction SIF engendre une nouvelle requête reprenant les mêmes informations que celles reçues dans la requête initiale, mais engendre un nouveau dialogue SIP en opérant en mode B2BUA à l'étape 102 cette nouvelle requête initiale étant transmise au prochain noeud en effectuant un appel des étapes 109, 110 et 111, lesquelles seront décrites ultérieurement dans la description. Les étapes 109 et 110 peuvent être fusionnées.

Dans ces conditions, la fonction d'invocation sélective de service SIF gère un dialogue SIP avec l'agent utilisateur du terminal abonné demandeur A et un autre dialogue SIP avec l'agent utilisateur du terminal abonné B.

Au contraire, si au moins un critère de filtrage de déclenchement conditionnel de service existe pour le message M_SIP reçu, test 101 SIC≠Ø? représenté en figure 5a, la fonction d'invocation sélective de service exécute alors les opérations suivantes :

Discrimination du message M_SIP comme constituant ou non une requête initiale établissant ou non un dialogue SIP.

Le déclenchement des services sur les transactions n'établissant pas de dialogue SIP créées par certaines requêtes comme les requêtes OPTIONS, REGISTER, MESSAGE, etc. est souvent lié à la requête initiale et non pas aux réponses à cette requête. Dans le but de ne pas compliquer le processus de traitement au niveau de la fonction d'invocation sélective de service SIF, et selon le procédé, objet de l'invention, on conserve la même procédure d'invocation des serveurs d'application AS et la fonction d'invocation sélective de service SIF n'opère pas alors en mode B2BUA pour ces requêtes.

Les opérations correspondantes sont représentées par l'étape de test 100 à la figure 5a consistant à vérifier si le message M_SIP est une requête initiale par le test M_SIP=IR ?.

Sur réponse négative au test 100, la fonction SIF appelle un mode opératoire correspondant à une procédure 200 selon laquelle le message M_SIP appartient à un dialogue SIP existant D_SIP, cette procédure étant décrite ultérieurement dans la description en liaison avec la figure 5b.

Au contraire, sur réponse positive au test 100, le message M_SIP est une requête initiale et ce test est suivi alors du test 101 précité.

Sur réponse positive au test 101 SIC≠Ø, le message M_SIP initiant un dialogue D_SIP, une étape 103 est appelée de vérification de ce message à un premier critère de filtrage de déclenchement conditionnel de service SIC en terme de priorité non encore testé et qui est applicable à ce dernier.

A l'étape 103 de la figure 5a, ce test est noté $M_SIP \equiv SIC_j$?

Sur réponse négative au test de vérification précité, c'est-à-dire si $SIC_j$ n'est pas satisfait mais s'il reste au moins un critère de filtrage SIC non encore vérifié, cette situation étant représentée par la réponse négative au test 103 de la figure 5a avec $j \leq J$, le processus de vérification est recommencé par incrémentation j=j+1 à l'étape 104 et retour par appel de l'étape 103.

Si au contraire, aucun critère de filtrage de déclenchement conditionnel de service non testé correspondant au message M_SIP ne reste, cette situation étant représentée par la réponse négative au test 103 avec toutefois j>J, alors la fonction d'invocation sélective de service SIF procède à l'appel d'une étape 109 consistant en la terminaison de la requête initiale IR c'est-à-dire du message M_SIP, c'est à dire se comporte comme un agent utilisateur d'extrémité T_UA pour cette requête, l'étape 109 étant suivie d'une étape 110 de génération d'une nouvelle requête initiale notée N_IR reprenant les mêmes informations reçues que dans la requête initiale IR mais initiant un nouveau dialogue SIP sortant, noté ND_SIPs, et transmission à l'étape 111 de la nouvelle requête initiale N_IR au prochain noeud en effectuant un routage SIP standard défini par exemple dans la recommandation RFC3261.La fonction SIF se comporte ainsi en mode B2BUA pour le dialogue SIP initié par cette requête.

Au contraire, sur réponse positive au test 103, le message M_SIP satisfait alors le critère de filtrage de déclenchement conditionnel de service $SIC_j$. Dans cette situation, la fonction d'invocation sélective de service SIF agit comme un agent utilisateur d'extrémité T_UA pour la requête correspondante. L'étape 103 est alors suivie d'une étape 105 de création d'un dialogue D_SIP entrant, noté D_SIPe=("a",SIF,A). Ce dialogue est alors désigné de manière simplifiée dialogue "a".

L'étape 105 est alors suivie d'une étape 106 consistant à engendrer une nouvelle requête N_IR reprenant les mêmes champs que ceux de la requête initiale, c'est-à-dire ceux du message M_SIP, mais initiant un nouveau dialogue sortant présentant de nouveaux en-têtes Call-ID et FROM tag, ce dialogue étant noté D_SIPs=("b",SIF,AS). Ce dialogue est désigné de manière simplifiée dialogue "b".

Dans la nouvelle requête, N_IR, la fonction d'invocation sélective de service SIF ajoute le paramètre P-Original-Dialog et insère l'URI du serveur d'application AS spécifiée par le critère de filtrage de déclenchement conditionnel de service $SIC_j$ satisfait, cette insertion étant effectuée en tête du champ Route suivi par sa propre URI selon la recommandation 3GPP. L'étape 107 est alors suivie d'une étape 108 de transmission de la nouvelle requête ainsi complétée N_IR vers le serveur d'application AS. Dans ces conditions, le serveur d'application AS peut ainsi agir en tant qu'agent utilisateur de terminaison ou T_UA, en tant que Proxy ou en tant que B2BUA.

Les opérations exécutées par la fonction d'invocation sélective de service SIF en fonction du comportement du serveur d'application AS sont représentées sur la figure 5a.

Si, ainsi que représenté au test 108a de la figure 5a, le serveur d'application AS se comporte en agent utilisateur d'extrémité T_UA, ce dernier ne retourne donc pas la requête reçue N_IR. La fonction SIF abandonne alors les éventuels critères de filtrage de déclenchement conditionnel de service $SIC_k \neq j$ concernant la requête initiale IR.

Dans cette situation, en réponse 1 au test 108a de la figure 5a, le serveur d'application AS ne crée donc pas de nouveau dialogue et la fonction SIF se contente ensuite de corréler le dialogue "a" avec le dialogue "b". La fonction SIF transmet les messages M_SIP reçus dans le dialogue "a" vers le dialogue "b" et vice-versa. Ces opérations et les dialogues "a" et "b" sont représentés en figure 6a.

Si, au contraire, selon la situation de réponse 2 au test 108a, le serveur d'application AS se comporte comme un proxy, ce dernier retourne alors la requête initiale éventuellement modifiée. Dans ce cas, si d'autres critères de filtrage de déclenchement conditionnel de service $SIC_k \neq j$ n'ont pas encore été soumis à vérification, la fonction SIF revient à l'étape de vérification, soit à l'étape 103 de la figure 5a. Sinon, la fonction SIF repasse à la succession des étapes 109, 110 et 111. Le serveur d'application AS ne crée pas de nouveau dialogue et la fonction SIF se contente par la suite de corréler le dialogue "a" avec le dialogue "b". La fonction SIF transmet les messages SIP reçus dans le dialogue "a" vers le dialogue "b" et vice-versa. Les dialogues correspondants sont représentés en figure 6b.

Si, selon la réponse 3 au test 108a de la figure 5a, le serveur d'application AS se comporte en B2BUA, ce dernier termine la requête qu'il reçoit et retourne une nouvelle requête initiant un nouveau dialogue, désigné dialogue entrant "aa". La fonction SIF corrèle le dialogue sortant "b" avec le dialogue entrant "aa" grâce au champ P-Original-Dialogue. Dans ce cas, si d'autres critères de filtrage de déclenchement conditionnel de service $SIC_k \neq j$ de la liste n'ont pas encore été vérifiés, la fonction SIF repasse à l'étape de vérification, c'est-à-dire au test 103 de la figure 5a. Sinon, elle appelle les étapes successives 109 à 111 précédemment décrites. Dans tous les cas, un nouveau dialogue SIP, désigné dialogue "b", est créé. Ensuite, la fonction SIF procède aux opérations suivantes :

- corrélation du dialogue entrant "a" avec le dialogue sortant "bb" et relais des messages SIP reçus dans le dialogue "a" vers le dialogue "bb" et vice-versa ;
- corrélation du dialogue entrant "aa" avec le dialogue sortant "b" et relais des messages M_SIP reçus dans le dialogue entrant "aa" vers le dialogue "b" et vice-versa.

Les dialogues correspondants sont représentés en figure 6c.

Une description plus détaillée du mode opératoire de la fonction SIF en réponse négative au test 100 de la figure 5a lorsque le message SIP appartient à un dialogue SIP sera maintenant décrite en liaison avec la figure 5b.

Dans un tel cas, les serveurs d'application AS éventuellement invoqués peuvent se comporter soit en mode B2BUA soit en mode proxy selon un dialogue plein état dit dialogue "Statefull", soit en mode proxy dialogue sans état dit dialogue "Stateless". Ces notions sont décrites dans la recommandation RFC3261. Ce dernier dialogue apparaît uniquement si le déclenchement se fait sur une réponse à la requête initiale.

Dans cette situation, on appelle D_SIP("m",SIF,A) le dialogue auquel appartient le message M_SIP, ce dialogue étant désigné dialogue incitateur "m" et le dialogue auquel ce dialogue est corrélé, le dialogue D_SIP("n",SIF,B). Cette corrélation a été exécutée par la fonction SIF suite à la réception d'une requête initiale ne déclenchant aucun AS ou suite à l'invocation d'un AS selon les procédures selon l'invention. Ce dialogue est désigné dialogue précurseur "n". L'un de ces dialogues est un dialogue entrant et l'autre est un dialogue sortant.

La fonction SIF opère alors sur critère de vérification en une étape 201 du premier critère de filtrage de déclenchement conditionnel de service $SIC_j$, s'il en existe pour ce message, en termes de priorité non encore testé applicable au message M_SIP. A l'étape 201 la vérification est notée $M_SIP \equiv SIC_j$ ?.

Sur réponse négative au test 201 et pour $j \leq J$, c'est-à-dire s'il reste au moins un critère $SIC_{k \neq j}$ non encore vérifié, la fonction SIF retourne à l'appel de l'étape de vérification 201 par une étape 202 d'incrémentation j=j+1 de passage au critère suivant.

Au contraire, si aucun critère SIC non testé correspondant au message M_SIP ne reste, c'est-à-dire sur réponse négative au test 201 pour j>J, alors la fonction SIF précitée appelle une étape 220 de transmission du message M_SIP dans le dialogue "n".

Au contraire, sur réponse positive au test 201, le message M_SIP satisfaisant le critère SIC, la fonction SIF crée un nouveau dialogue SIP sortant, noté D_SIPs=("b",SIF,AS) vers le serveur d'application AS qui sera ci-après désigné, dialogue sortant suiveur "b".

L'étape 203 est simultanée à une étape 204 consistant à engendrer une nouvelle requête initiale, notée $N_IR_m$, reprenant les mêmes informations contenues dans la requête initiale IR d'origine et qui avait créé le dialogue incitateur "m". Dans la nouvelle requête précitée, la fonction SIF ajoute un champ P-Original-Dialog et insère l'URI du serveur d'application AS en tête du champ ROUTE suivi par sa propre URI puis procède à la transmission de la nouvelle requête initiale $N_IR_m$ à l'étape 205 au serveur d'application AS. Les étapes 203 et 204 peuvent être fusionnées.

Le comportement de la fonction SIF est alors fonction du mode opératoire du serveur d'application AS.

Si, ainsi que représenté au test 206 de 1a figure 5b, le serveur d'application AS agit en mode B2BUA selon la situation (1), alors le serveur d'application précité procède en une étape 207 à une terminaison de la requête N_IRm, c'est à dire se comporte en tant que T_UA pour cette requête, initie un nouveau dialogue entrant D_IPe("a",SIFAS) ci-après désigné dialogue entrant renouvelé "a". Le serveur d'application AS crée, à l'étape 209, une nouvelle requête N_RIa dans le cadre du nouveau dialogue précité "a" puis transmet la nouvelle requête à la fonction SIF à l'étape 210. Les étapes 207, 208, 209 et 210 peuvent être regroupées.

A la réception de la requête précitée, à l'étape 211, la fonction SIF corrèle le dialogue sortant "b" suiveur avec le dialogue entrant renouvelé "a" et restitue dans l'étape 212 les messages mémorisés échangés entre les dialogues "n" et "m" dans les dialogues "a" et "b". Tant que le message qui a déclenché l'invocation du serveur d'application AS n'a pas encore été envoyé à ce dernier, car on est toujours dans la phase de restitution, ce serveur d'application AS se contente de relayer les messages entre les dialogues "a" entrant renouvelé et les dialogues "b" sortant suiveur.

Dans cette phase de restitution, la fonction SIF agit de façon à reproduire dans les dialogues "a" et "b" l'échange des messages qui a eu lieu dans les dialogues "n" et "m". Dans les dialogues "n" et "m" précités, l'un est entrant "e" et l'autre est sortant "s". La reproduction consiste en la reproduction par ordre chronologique de toutes les éventuelles autres réponses et transactions SIP, à l'exception des transactions liées aux méthodes qui ne sont pas supportées par le serveur d'application AS, telles que par exemple méthode PRACK, car la fonction SIF sait qu'ils sont des messages SIP qui ne sont pas supportés par l'AS à partir des informations contenues dans la requête initiale envoyée par ce dernier, et des transactions qui se sont produites au sein des dialogues "n" et "m" dont la réponse finale était différente de 491 "Request Pending", par exemple re-INVITE, UPDATE.

La reproduction de cet échange peut être effectuée de la manière suivante :

- s'il s'agit d'une réponse à la requête initiale, celle-ci est envoyée dans le dialogue "a" renouvelé sans attendre un retour du serveur d'application AS dans le dialogue "b";
- s'il s'agit d'une requête initiant une transaction, et si cette requête a été reçue dans le dialogue entrant "e", la fonction SIF envoie cette dernière dans le dialogue sortant, le dialogue "b" suiveur. Ensuite, la fonction SIF, une fois cette requête renvoyée dans le dialogue "a" par l'AS, y répond avec les réponses reçues à cette transaction dans le dialogue sortant "s". Si cette requête a été reçue dans le dialogue sortant "s" la fonction SIF l'envoie dans le dialogue renouvelé "a". Ensuite, lorsque la requête précitée a été renvoyée dans le dialogue suiveur "b", la fonction SIF y répond avec les réponses reçues à cette transaction dans le dialogue entrant "e".

Lorsque le message qui a déclenché l'invocation du serveur d'application AS est envoyé à ce dernier, l'invocation de ce serveur d'application est considéré comme exécutée, le serveur d'application AS ayant reçu le contexte de l'appel est inséré dans ce dernier et peut le contrôler.

Le message SIP renvoyé par le serveur d'application AS à l'étape 212a, suite à la restitution du message SIP ayant déclenché cette invocation, consiste en un message désigné M'_SIP, lequel est traité de la manière ci-après.

Le message M'_SIP est soumis à un test 219' vérifiant l'identité ou l'absence d'identité de nom avec le message M_SIP. Sur réponse négative, un retour au départ 200 est prévu pour soumettre le message M'_SIP à l'ensemble de la procédure. Le retour à l'étape 200 se fait avec le message M'_SIP appartenant au dialogue "m"' corrélé avec le dialogue "n"'.

Le dialogue "m"' est :

- le dialogue "a", si le message M'_SIP a été envoyé par le serveur d'application AS dans ce dialogue ;
- le dialogue "b", si le message M'_SIP a été envoyé par le serveur d'application AS dans ce dialogue.

Le dialogue "n"' est :

- Le dialogue "n", si le message M_SIP est reçu dans le dialogue "a";
- Le dialogue "m", si le message M_SIP est reçu dans le dialogue "b".

Sinon, sur réponse positive d'identité de nom, une étape 219'a est appelée. Si, ainsi que représenté à l'étape 219'a, le message M'_SIP retourné par le serveur d'application AS fait partie des messages auxquels les critères de filtrage SIC peuvent être appliqués, M'_SIP = SIC ? réponse positive et $j \leq I$, alors la fonction SIF provoque un retour à l'étape de vérification 201 par l'intermédiaire de l'étape 202.

Sinon, en réponse négative au test 219'a, pour $j>J$, soit en l'absence d'autres critères de filtrage SIC applicables au message M'_SIP, la fonction SIF procède à l'appel de la transmission à l'étape 220 du message M_SIP, en fonction du dialogue corrélé au dialogue "b". En fonction du comportement du serveur d'application AS et des éventuels autres critères de filtrage SIC, un ou plusieurs autres serveurs d'application peuvent être invoqués et insérés dans l'appel.

Lorsque le serveur d'application AS opère dans la situation (1) en mode B2BUA, il est possible de réduire le nombre de messages à renvoyer au serveur d'application AS pour lui donner le contexte de l'appel et insérer ce dernier dans cet appel, dans le cas où ce serveur d'application AS n'est intéressé que par les informations liées au dialogue SIP. La solution consiste à ajouter un paramètre dans le critère de filtrage de déclenchement conditionnel de service SIC indiquant que le serveur d'application AS n'est intéressé que par les informations liées au dialogue SIP sans les informations liées à la négociation de la session média, c'est-à-dire de l'échange SDP. Le paramètre précité peut être le paramètre Requested Context.

Lorsque la fonction SIF invoque un serveur d'application AS ayant satisfait à un critère de filtrage $SIC_j$ contenant un tel paramètre, ce paramètre pouvant correspondre au paramètre Requested Context = dialog, cette dernière se contente de transférer, au serveur d'application précité, la requête initiale, qui va créer le dialogue sortant suiveur "b" avec ce serveur d'application AS. Ensuite, lorsque ce serveur d'application précité retourne cette requête initiant un autre dialogue entrant avec la fonction SIF à l'étape 208, initiation du dialogue "a" entrant :

- si le serveur d'application AS est invoqué suite à la réception d'une réponse à la requête initiale, la fonction SIF répond à cette requête avec cette réponse ;
- si le serveur d'application AS est invoqué suite à la réception d'une requête appartenant au dialogue, la fonction SIF répond à cette requête avec la dernière réponse reçue à la requête initiale dans le dialogue sortant. Ensuite, si l'appel n'est pas encore établi, la fonction SIF envoie la requête déclenchant cette invocation. Sinon, elle reproduit la transaction ACK d'accusé de réception dans les dialogues "a" renouvelé et "b" suiveur avant d'envoyer la requête déclenchant cette invocation dans le dialogue précité, si cette requête a été reçue dans le dialogue entrant ou dans le dialogue "a" renouvelé sinon.

Ensuite, lorsque le message M_SIP ayant satisfait au critère SICj est transmis à l'AS, en fin de la phase de restitution de messages, si le message SIP retourné par ce dernier fait partie des messages auxquels les critère de filtrage SIC peuvent être appliqués, la fonction SIF repasse à l'étape de vérification 201. Sinon, la fonction SIF repasse à l'étape 213. En fonction du comportement du serveur d'application AS et des autres critères de filtrage SIC éventuels, un ou plusieurs autres serveurs d'application AS peuvent être invoqués et insérés dans l'appel.

Les opérations de relais par réplication des messages SIP par la fonction SIF sont alors exécutées en fonction de la qualité de dialogue entrant respectivement sortant, du dialogue incitateur "m" ainsi que représenté au test 213 D_SIPM ? de la figure 5b.

Si le test D_SIPm ? indique que le dialogue "m" est un dialogue entrant, réponse e du test 213, alors, la fonction SIF procède au relais par réplication des messages reçus dans le dialogue entrant "m" et destinés à l'agent utilisateur d'extrémité B dans le dialogue sortant suiveur "b", des messages reçus dans le dialogue suiveur "b" et destinés à l'agent utilisateur d'origine A dans le dialogue incitateur "m", des messages reçus dans le dialogue entrant renouvelé "a" et destinés à l'agent utilisateur d'extrémité B dans un dialogue sortant précurseur actualisé, dialogue "nn", des messages reçus dans le dialogue sortant précurseur actualisé, dialogue "nn" et destinés à l'agent utilisateur d'origine A dans le dialogue entrant renouvelé "a".

Les dialogues précités sont représentés en figure 7a dans cette situation. Le dialogue sortant précurseur actualisé "nn" n'est autre que le dialogue "n" dialogue précurseur "n" corrélé avec le dialogue incitateur "m" précédemment cité, si aucun autre serveur d'application AS n'est invoqué ou le dialogue créé suite à l'invocation d'un autre serveur d'application. Si un autre Serveur d'Application (ASx) a été invoqué et inséré après le serveur d'application (AS), le dialogue nn correspond au dialogue sortant corrélé au dialogue "a" suite à cette invocation.

Si, au contraire le dialogue incitateur "m" est un dialogue sortant, la fonction SIF procède au relais par réplication des messages reçus dans le dialogue incitateur "m" précité destinés à l'agent utilisateur d'origine A dans le dialogue entrant renouvelé "a", des messages reçus dans le dialogue entrant renouvelé "a" et destinés à l'agent utilisateur d'extrémité B dans le dialogue incitateur "m", des messages reçus dans le dialogue entrant renouvelé "a" et destinés à l'agent utilisateur d'origine dans le dialogue SIP sortant suiveur "b", des messages reçus dans le message sortant précurseur actualisé "nn" et destinés à l'agent utilisateur terminal dans le dialogue sortant suiveur "b".

Les différents dialogues correspondants lorsque le dialogue "m" incitateur est un dialogue sortant sont représentés en figure 7b. De même que dans le cas de la figure 7a, le dialogue "nn" est le dialogue "n" précurseur, si aucun autre serveur d'application AS n'est invoqué ou le dialogue sortant créé suite à l'invocation d'un autre serveur d'application AS. Si un autre Serveur d'Application (ASx) a été invoqué et inséré après le serveur d'application (AS), le dialogue nn correspond au dialogue entrant corrélé au dialogue "b" suite à cette invocation.

Si, au contraire, le serveur d'application AS, en réponse au test 206, agit en mode proxy selon la situation (2), soit en dialogue plein état ou en dialogue sans état, le serveur d'application précité ne crée pas d'autre dialogue SIP.

Dans cette situation, la fonction SIF agit de manière à reproduire dans le dialogue "b" suiveur l'échange des messages intervenus dans le dialogue "m" incitateur.

Dans ce but, la fonction SIF reproduit, par ordre chronologique, toutes les éventuelles autres réponses et transactions produites dans le dialogue "m" incitateur dans le dialogue "b" suiveur, à l'exception des transactions liées aux méthodes qui ne sont pas supportées par le serveur d'application AS, telle que la méthode PRACK précitée, lorsque la requête initiale renvoyée par le serveur d'application AS indique que cette méthode n'est pas supportée et les transactions qui se sont produites au sein des dialogues dont la réponse finale était 491 "Request pending", telle que "RE-INVITE, UPDATE".

L'opération de reproduction à l'étape 216 est notée :

$$B_SIP("m") \leftrightarrow D_SIP("b").$$

La réplication de cet échange peut être effectuée de la manière suivante :

- s'il s'agit d'une réponse à la requête initiale IR, celle-ci est envoyée dans le dialogue "b" suiveur sans attendre un retour du serveur d'application AS ;
- s'il s'agit d'une requête initiant une transaction, cette dernière est envoyée dans le dialogue "b" suiveur.

Ensuite, lorsque le serveur d'application AS a renvoyé cette requête, la fonction SIF lui envoie les éventuelles réponses reçues à cette requête. Lorsque le message M_SIP, ayant déclenché l'invocation du serveur d'application AS est envoyé à ce dernier, l'invocation du serveur d'application précité est considérée comme étant exécutée. Le serveur d'application AS a reçu le contexte de l'appel et est inséré dans l'appel. Le nombre de messages à renvoyer au serveur AS pour donner à ce dernier le contexte de l'appel et l'insérer dans cet appel peut être réduit dans le cas où le serveur d'application AS précité n'est intéressé que par les informations liées au dialogue SIP. La solution ci-après peut être envisagée semblable à la solution décrite avec le mode opératoire B2BUA du serveur d'application AS, c'est-à-dire ajouter un paramètre tel que le paramètre Requested Context précité dans le critère de filtrage SIC indiquant que le serveur d'application considéré AS n'est intéressé que par les informations liées au dialogue SIP. Le mode opératoire est alors sensiblement alors le même que celui décrit précédemment lorsque le serveur d'application AS opère en mode B2BUA pour réduire le nombre de messages à remonter vers le serveur d'application AS dans le cas où ce dernier n'est intéressé que par les informations liées au dialogue SIP. Toutefois, on indique que, en mode proxy, le serveur d'application AS ne créée aucun nouveau dialogue et toute requête est retournée dans le même dialogue "b" suiveur existant.

Le message SIP, renvoyé par le serveur d'application AS suite à la restitution du message SIP ayant déclenché cette invocation à l'étape 218, consiste en un message désigné M'_SIP, lequel est alors traité de la manière ci-après.

Le message M'_SIP est soumis à un test 219 vérifiant l'identité ou l'absence d'identité de nom avec le message M_SIP. Sur réponse négative, un retour à l'étape 201 est prévu pour soumettre le message M'_SIP à l'ensemble de la procédure. Le retour à l'étape 200, puis 201, se fait avec le message M'SIP appartenant au dialogue "b" corrélé avec le dialogue "n". Sinon, sur réponse positive d'identité de nom, une étape 219a est appelée.

Si, ainsi que représenté à l'étape 219a, le message M'_SIP retourné par le serveur d'application AS fait partie des messages auxquels les critères de filtrage SIC peuvent être appliqués, ce test étant représenté à l'étape 219a par la relation :

$$M'_SIP \equiv SIC \text{ ? réponse positive pour } j \leq J,$$

alors, la fonction SIF provoque un retour à l'étape de vérification 201 par l'intermédiaire de l'étape 202.

Sinon, en réponse négative à l'étape de test 219a, et pour j > J, c'est-à-dire en l'absence d'autres critères de filtrage SIC applicables aux messages de réponse M'_SIP, la fonction SIF procède à l'appel de la transmission à l'étape 220 du message M_SIP en fonction de du dialogue corrélé au dialogue "b", ainsi que décrit précédemment. En fonction du comportement du serveur d'application AS et des éventuels autres critères de filtrage SIC, un ou plusieurs autres serveurs d'application peuvent être invoqués et insérés dans l'appel.

Les opérations de relais par duplication des messages SIP dans les dialogues correspondants, lorsque le serveur d'application AS opère en mode proxy, sont fonction de la qualité de dialogue entrant respectivement sortant du dialogue "m" incitateur. Si, ainsi que représenté au test 221, le dialogue "m" noté D_SIP("m") est un dialogue entrant, alternative e du test 221, la fonction SIF exécute le relais par l'application des messages reçus du serveur d'application AS dans le dialogue "b" suiveur et destinés à l'agent utilisateur d'origine A dans le dialogue "m" incitateur, des messages reçus du serveur d'application AS dans le dialogue "b" suiveur et destinés à l'agent utilisateur d'extrémité B dans le dialogue "nn" précurseur actualisé, des messages reçus des agents utilisateurs d'origine A, respectivement d'extrémité B, dans les dialogues "m" incitateurs et dans les dialogues "nn" précurseurs actualisés dans le dialogue "b" suiveur.

Les dialogues correspondants sont représentés en figure 8a. Le dialogue "nn" précurseur actualisé est le dialogue "n" précurseur, si aucun autre serveur d'application AS n'est invoqué ou le dialogue sortant créé suite à l'invocation d'un autre AS. Si un autre Serveur d'Application (ASx) a été invoqué et inséré après le serveur d'application (AS), le dialogue "nn" correspond au dialogue **sortant** corrélé au dialogue "b" suite à cette invocation.

Si, au contraire, le dialogue "m" dialogue D_SIP("m") est un dialogue sortant, alternative s du test 221, la fonction SIF procède au relais par réplication des messages reçus du serveur d'application AS dans le dialogue "b" suiveur et destinés à l'agent utilisateur d'origine A dans le dialogue "nn" précurseur actualisé, des messages reçus du serveur d'application AS dans le dialogue "b" suiveur et destinés à l'agent utilisateur d'extrémité B dans la dialogue "m" incitateur, de tous les messages reçus de l'agent utilisateur d'origine A et de l'agent utilisateur d'extrémité B dans le dialogue "nn" précurseur actualisé et dialogue "n" incitateurs dans le dialogue "b" suiveur, lorsque le serveur d'application agit en mode de dialogue plein état encore désigné Dialog Statefull, c'est-à-dire lorsque le serveur d'application AS a inséré son URI dans l'en-tête de champ Record Route de la requête initiale, des seules réponses à la requête initiale reçues dans le dialogue "m" incitateur si le serveur d'application AS agit en mode dialogue sans état, encore désigné Dialog Stateless, c'est-à-dire lorsque le serveur d'application n'a pas inséré son URI dans l'en-tête Record Route de la requête initiale précitée.

Les différents dialogues précités sont représentés en figure 8b.

Le dialogue "nn" est le dialogue "n", si aucun autre serveur d'application AS n'est invoqué ou le dialogue sortant créé suite à l'invocation d'un autre serveur d'application AS. Si un autre Serveur d'Application ASx a été invoqué et inséré après le serveur d'application AS, le dialogue nn correspond au dialogue **entrant** corrélé au dialogue "b" suite à cette invocation.

Un diagramme spatio-temporel d'un mode de réalisation particulier du procédé objet de l'invention, en mode transparent, est maintenant décrit en liaison avec la figure 9.

Le mode de réalisation précité est donné à titre d'exemple et illustre le cas d'un service se déclenchant sur la réception de la réponse 180 "Ringing" à une requête "INVITE" du service CRBT ou service Call Waiting, par exemple, pour une communication vocale sur réseau IP par exemple. On suppose que la logique de ce service se comporte en B2BUA et, avant de recevoir la réponse 180 précitée, se contente de relayer les messages entre les dialogues "b" et "a". Ensuite, à la réception de la réponse 180 "Ringing" du terminal utilisateur B, la fonction SIF opérant en mode B2BUA transmet une réponse 183 "Session Progress" à l'agent utilisateur d'origine A pour préparer la connexion média par exemple et la fait suivre de la réponse 180 "Ringing".

La chronologie des messages SIP transmis entre le terminal de l'agent utilisateur d'origine O_UA et du terminal d'extrémité B et de l'agent utilisateur d'extrémité de ce dernier est alors le suivant :

- 1 : INVITE de A à S-CSCF ;

- 2 : INVITE de S-CSCF à la fonction SIF, laquelle dans cet exemple est représentée implémentée à l'extérieur du serveur d'appel S-CSCF ;
- 3 : INVITE de la fonction SIF au serveur d'appel S-CSCF ;
- 4 : INVITE de S-CSCF vers l'agent utilisateur du terminal B ;
- 5 : "Ringing" du terminal B au serveur d'appel S-CSCF ;
- 6 : "Ringing" de S-CSCF à la fonction SIF ;
- 7 : INVITE de la fonction SIF vers le serveur d'application AS opérant en mode B2BUA ;
- 8 : INVITE du serveur d'application AS à la fonction SIF ;
- 9 : "Ringing" de la fonction SIF au serveur d'application AS ;
- 10 : Session Progress du serveur d'application AS à la fonction SIF ; le message Session Progress est relayé à S-CSCF ;
- 11 : "Session Progress" de la fonction SIF au serveur S-CSCF ;
- 12 : "Session Progress" du serveur S-CSCF au terminal d'origine appelant A;
- 13 : "Ringing" du serveur d'application AS à la fonction SIF ;
- 14 : "Ringing" de la fonction SIF au serveur d'appel S-CSCF;
- 15 : "Ringing" du serveur d'appel S-CSCF au terminal d'origine appelant A.

Les dialogues m, n, "a" et "b" sont représentés au dessin.

Dans les deux cas, lorsque le serveur d'application AS a été invoqué, la fonction SIF se contente de transférer, en moyennant les adaptations nécessaires, les messages provenant de A dans le dialogue "m" vers le serveur d'application AS dans le dialogue "b" et les messages reçus du serveur d'application AS dans le dialogue "b" vers le terminal appelant A dans le dialogue "m".

Il en est de même en ce qui concerne les messages provenant du terminal appelé B dans le dialogue "n" vers le serveur d'application AS dans le dialogue "a" et des messages reçus du serveur d'application AS dans le dialogue "a" vers B, terminal appelé, dans le dialogue "n".

Les messages SIP, selon leur chronologie, appartiennent aux dialogues suivants :

1, 12, 14,15 dialogue "m" ;
7, 10, 13 dialogue "b";
8, 9 dialogue "a";
3, 4, 5, 6 dialogue "n".

Un mode de mise en oeuvre de la fonction SIF non transparent au serveur d'application AS, mais présentant l'avantage d'une réduction du nombre de messages SIP transmis et, en outre, de simplifier le traitement au niveau de la fonction SIF précitée, ainsi que de réduire le délai de transfert du contexte d'appel au serveur d'application AS, sera maintenant décrit en liaison ave les figures 10a, 10b et 10c.

Le mode de mise en oeuvre précité diffère par rapport aux modes de mise en oeuvre précédemment décrits en liaison avec les figure 5a et 5b par le seul traitement lié à l'invocation d'un serveur d'application AS à la réception d'un message SIP appartenant à un dialogue SIP satisfaisant un critère de filtrage SIC, c'est-à-dire que le mode opératoire de la figure 5b est remplacé sensiblement par celui de la figure 10a telle que décrite.

En référence à la figure 10a précitée, on considère donc l'existence d'un message M_SIP, de critères de filtrage $SIC = \{SIC_j\}_{j=1}^{j=J}$ et, conformément aux conditions initiales du mode opératoire du procédé objet de l'invention représentée en figure 5b, l'existence du dialogue incitateur D_SIP("m", SIF, A, B) et du dialogue précurseur D_SIP("n", SIF, A, B) corrélé à ce dernier.

Dans le mode opératoire de la fonction SIF, on indique que celle-ci opère en mode B2BUA pour la mise en oeuvre du procédé objet de l'invention en mode non transparent.

Sur réception du message M_SIP, la fonction SIF exécute une vérification à l'étape 300 de ce message vis-à-vis des critères de filtrage SIC et, en particulier, du premier critère de filtrage $SIC_j$ en terme de priorité non encore testé.

Cette opération est notée vérification M_SIP ≡ $S_SIC_j$ ? à l'étape 300. Si le critère de filtrage $SIC_j$ n'est pas satisfait, et si, il reste au moins un critère de filtrage $SIC_{k \neq j}$ non encore vérifié, ainsi que représenté en réponse négative à l'étape 300 pour $j \leq J$, alors, la fonction SIF appelle une étape 301 de passage au critère de filtrage SIC suivant symbolisé par la relation j=j+1 et par le retour à l'appel de l'étape 300.

Si, au contraire, aucun critère de filtrage SIC non testé correspondant à ce message ne reste, ainsi que représenté à l'étape négative du test 300 pour j > J, alors, la fonction SIF procède à l'appel d'une étape 309 de transmission du message M_SIP dans le dialogue "n".

Si, au contraire, le message M_SIP satisfait au critère de filtrage $SIC_j$, alors, la fonction SIF procède à la création d'un dialogue D_SIP ("c", SIF, AS), la fonction SIF transmet alors, en une étape 303, au serveur d'application AS tous les messages échangés dans le dialogue incitateur "m". Les étapes 302 et 303 peuvent être exécutées en une seule étape dans laquelle la fonction SIF envoie tous les messages reçus dans le dialogue « m » dans un autre dialogue « c » au serveur d'application AS. Les identifiants du dialogue de ces messages sont différents de ceux du dialogue "m" incitateur précité et de ceux du dialogue "n" précurseur précité. Ils appartiennent ainsi au dialogue créé à l'étape 302 désigné dialogue "c", dit dialogue suiveur. Lorsque tous ces messages sont envoyés au serveur d'application AS, l'invocation de ce dernier est considérée comme exécutée. L'opération de transmission des messages à l'étape 303 est notée :

$$\text{Transmission M _SIPc} \rightarrow \text{AS.}$$

Cette transmission est effectuée dans le dialogue D_SIP ("c", SIF, AS).

Pour réduire le nombre de messages à transmettre au serveur d'application S dans le but de lui donner le contexte d'appel et insérer ce dernier dans cet appel, dans le cas où ce serveur d'application AS n'est intéressé que par les informations liées au dialogue SIP, il est possible, ainsi que mentionné précédemment dans la description en liaison avec la figure 5b notamment, d'ajouter un paramètre dans le critère de filtrage SIC, tel que le paramètre Requested Context, indiquant que le serveur d'application considéré AS n'est intéressé que par les informations liées au dialogue SIP. Lorsque la fonction SIF invoque ensuite un serveur d'application AS suite à la vérification d'un critère de filtrage $SIC_j$ contenant une telle indication, la fonction SIF permet de remonter uniquement les messages liés à l'établissement du dialogue SIP, c'est-à-dire la requête initiale IR et la dernière réponse reçue à cette requête ainsi que le message M_SIP déclenchant l'invocation du serveur d'application AS si ce message n'est pas une réponse à la requête initiale.

Lorsque l'invocation du serveur d'application AS est exécutée, c'est-à-dire après l'étape 303 représentée en figure 10a, si le message SIP noté M"_SIP retourné par ce dernier, cette opération étant notée à l'étape 304

$$\text{Transmission AS} \rightarrow \text{SIF} \rightarrow \text{M''_SIP.}$$

L'étape 304 est suivie d'un test 305a d'identité de nom des messages M"_SIP et M_SIP. Sur réponse négative au test 305a, un retour à l'étape 300 est exécuté. Le message M"_SIP appartient au dialogue "b" corrélé au dialogue "m" si ce message est destiné à l'agent utilisateur A ou au dialogue "n" si ce message est destiné à l'agent utilisateur B. Le message M"_SIP étant soumis à l'ensemble de la procédure. Sinon, une étape de test 305 de vérification des critères de filtrage par le message M"_SIP est appelée.

Si le message M"_SIP fait partie des messages auxquels les critères de filtrage SIC peuvent être appliqués, alors, la fonction SIF exécute un test 305 de vérification d'existence de critères de filtrage pour le message de réponse noté :

$$\text{M''_SIP} \equiv \text{SIC ?}$$

et, en réponse négative pour un critère de filtrage j donné, mais en cas d'existence d'autres critères de filtrage pour $j \leq J$ à un retour à l'étape de vérification 300.

Au contraire, en l'absence d'existence d'autres critères de filtrage applicables au message de réponse M"_SIP, c'est-à-dire en réponse négative au test 305 pour $j > J$, alors, la fonction SIF procède à l'appel de l'étape 309 de transmission du message M_SIP au prochain noeud dans le dialogue qui lui est corrélé..

En fonction du comportement du serveur d'application AS et des éventuels autres critères de filtrage SIC, un ou plusieurs autres serveurs d'application peuvent être invoqués et insérés dans l'appel, ainsi qu'il sera décrit ultérieurement dans la description.

Les opérations réalisées par la fonction SIF dépendent de la qualité de dialogue entrant, respectivement sortant, du dialogue "m" incitateur.

La qualité de dialogue entrant, respectivement sortant, est discriminée par la fonction SIF, par un test 306 noté B_SIP("m") ? représenté sur la figure 10a.

Si le dialogue "m" incitateur est un dialogue entrant, alternative e du test 306, alors, la fonction SIF procède au relais par réplication des messages reçus du serveur d'application AS dans le dialogue suiveur "c" et destinés à l'agent utilisateur d'origine du terminal appelant A dans le dialogue "m" incitateur, des messages reçus du serveur d'application AS dans le dialogue "c" suiveur et destinés à l'agent utilisateur d'extrémité du terminal appelé B dans le dialogue "nn" précurseur actualisé, des messages reçus de l'agent utilisateur d'origine du terminal A appelant et de l'agent utilisateur d'extrémité du terminal appelé B dans les dialogues "n" incitateur et "nn" précurseur actualisé dans le dialogue "c" suiveur.

Les différents dialogues précités et les opérations de réplication précédentes correspondantes sont représentés à la figure 10b. Le dialogue "nn" précurseur actualisé est le dialogue "n" précurseur, si aucun autre serveur d'application AS n'est invoqué, ou le dialogue sortant créé suite à l'invocation d'un autre serveur d'application AS après l'AS en question.

Si, en réponse au test 306, alternative s, le dialogue "m" incitateur est un dialogue sortant, alors, la fonction SIF procède au relais par réplication des messages reçus du serveur d'application AS dans le dialogue "c" suiveur et destinés à l'agent utilisateur d'origine du terminal appelant A dans le dialogue "nn" précurseur actualisé, des messages reçus du serveur d'application AS dans le dialogue "c" suiveur et destinés à l'agent utilisateur d'extrémité du terminal appelé B dans le dialogue "m" incitateur, de tous les messages reçus du terminal appelant A et du terminal appelé B dans le dialogue "nn" précurseur actualisé et dialogue "m" incitateur dans le dialogue "c" suiveur.

Les différents dialogues précités et les opérations correspondantes de la fonction SIF sont illustrés en figure 10c. Le dialogue "nn" précurseur actualisé est le dialogue "n" précurseur si aucun autre serveur d'application AS n'est invoqué, ou le dialogue sortant créé suite à l'invocation d'un autre serveur d'application AS après le serveur d'application AS en question.

Le mode de mise en oeuvre du procédé objet de l'invention tel que représenté en figure 10a à 10c implique que le serveur d'application AS est en mesure de déduire le contexte de l'appel à partir des messages SIP qui lui sont transmis par la fonction SIF. Dans ce cas, le serveur d'application AS ne se comporte pas en mode B2BUA, mais gère uniquement un seul dialogue. Une fois que le contexte de l'appel a été construit, le serveur d'application AS agit alors en mode proxy mais peut modifier tous les messages SIP comme s'il était en mode B2BUA. C'est alors la fonction SIF qui masque un tel comportement non conforme à la norme SIP grâce à son positionnement en mode B2BUA.

Un exemple de mise en oeuvre du procédé objet de la présente invention, dans le mode non transparent, sera maintenant décrit en liaison avec la figure 11.

En mode non transparent, vis-à-vis du serveur d'application de service AS, la fonction d'invocation sélective de service SIF restitue au service d'application de service AS les messages mémorisés en les délivrant par réplication, et le serveur d'application de service AS reconstitue un dialogue réel entre l'agent utilisateur d'origine et l'agent utilisateur d'extrémité.

L'exemple de mise en oeuvre précité illustre le cas d'un service se déclenchant sur la réception de la réponse 180 "Ringing" à une requête INVITE du service Call Ring Back Tone, service Call Waiting, ou etc... On suppose que la logique de ce service, avant de recevoir la réponse 180 précitée, se contente de relayer les messages reçus puis, lors de la réception de la réponse 180 Ringing du terminal appelé B, elle envoie une réponse 183 "Session Progress" au terminal appelant A pour préparer la connexion média par exemple, cette réponse 183 étant ensuite suivie de la réponse 180 Ringing, la succession temporelle des messages étant alors la suivante :

- 1 : INVITE du terminal appelant A au serveur d'appel S-CSCF;
- 2 : INVITE de S-CSCF à la fonction SIF opérant en mode B2BUA ;
- 3 : INVITE de la fonction SIF au serveur S-CSCF;
- 4 : INVITE de S-CSCF au terminal appelé B ;
- 5 : "Ringing" du terminal appelé B à S-CSCF;
- 6 : "Ringing" de S-CSCF à la fonction SIF ;
- 7 : INVITE de la fonction SIF au serveur d'application AS ;
- 8 : "Ringing" de la fonction SIF au serveur d'application AS ;
- 9 : "Session Progress" du serveur d'application AS à la fonction SIF ;
- 10 : "Session Progress" de la fonction SIF au serveur S-CSCF ;
- 11 : "Session Progress" entre le serveur S-CSCF et le terminal appelant A ;
- 12 : "Ringing" du serveur d'application AS à la fonction SIF ;
- 13 : "Ringing" de la fonction SIF au serveur S-CSCF ;
- 14 : "Ringing" du serveur S-CSCF au terminal appelant A.

Dans cet exemple, la fonction SIF invoque le serveur AS en lui envoyant tous les messages échangés pour l'appel.

Ensuite, la fonction SIF se contente de relayer les messages en moyennant les adaptations nécessaires provenant du terminal appelant A et du terminal appelé B vers le serveur d'application AS dans le dialogue suiveur "c", les messages provenant du serveur d'application AS et destinés au terminal appelant A vers ce dernier, et les messages provenant du serveur d'application AS et destinés au terminal appelé B vers ce dernier. On note en particulier qu'il existe un seul dialogue SIP entre la fonction SIF et le serveur d'application AS, le dialogue "c" suiveur précédemment décrit.

Les messages SIP, selon leur chronologie, appartiennent aux dialogues suivants :

1, 2, 10, 11, 13, 14 dialogue "m" ;

3, 4, 5, 6 dialogue "n" ;
7, 8, 9, 12 dialogue "c".

Une description plus détaillée d'un processus de désengagement du serveur d'application invoqué AS, antérieurement à la fin de l'appel de l'agent utilisateur d'extrémité par l'agent utilisateur d'origine, c'est-à-dire par les terminaux A et B précédemment décrits, sera maintenant donnée en liaison avec la figure 12a et les figures suivantes.
En référence à la figure 12a, le serveur d'application AS qui souhaite demander le désengagement de l'appel procède à la transmission à une étape 400 d'un message contenant une information de désengagement d'appel, message M_DIS(AS) vers la fonction d'invocation sélective de service SIF.
Sur réception de ce message et de cette information de désengagement, suite à l'étape 400, la fonction SIF procède lors d'une étape 401 à la terminaison des dialogues établis avec le serveur d'application AS. L'étape 401 peut alors être suivie d'une étape 402 de rétablissement de la corrélation entre les dialogues existant entre l'agent utilisateur d'origine du terminal A et la fonction d'invocation sélective de service SIF, et entre la fonction sélective de service et l'agent utilisateur d'extrémité du terminal appelé B pour cette appel, pour rétablir la corrélation qui existait avant l'invocation du serveur d'application AS).
Les figures 12b et 12c représentent les dialogues mis en jeu pour la mise en oeuvre de la procédure de désengagement du serveur d'application AS car la fonction d'invocation sélective de service SIF opère en mode B2BUA.
Dans ces conditions, il est possible de faire ressortir le serveur d'application AS, après son invocation, de l'appel sans pour autant terminer cet appel.
Le message de désengagement d'appel est envoyé dans l'un ou les deux dialogues SIP établis avec la fonction SIF , c'est-à-dire les dialogues "a" et/ou "b" sur la figure 12b. A la réception de cette information, la fonction SIF termine le ou les dialogues établis avec le serveur d'application AS et rétablit ensuite la corrélation à l'étape 402 entre les dialogues "m" et les dialogues "n". Un seul des dialogues tel que le dialogue b peut être utilisé ainsi que représenté en figure 12c. L'existence d'un ou deux dialogues dépend du mode opératoire du serveur d'application AS, mode B2BUA, Proxy ou non transparent.
A titre d'exemple non limitatif, l'utilisation du message BYE du protocole SIP peut être utilisé, ce message contenant un paramètre signifiant que ce dernier est destiné à désengager le serveur d'application AS de l'appel et non pas de terminer ce dernier.
Le paramètre de désengagement peut être contenu dans un nouvel en-tête à définir ou dans un nouvel en-tête existant tel que Call-Info par exemple. Le message BYE est envoyé dans chaque dialogue établi avec la fonction SIF pour l'appel considéré.
Dans le cas où la fonction SIF opère en mode non transparent, il n'existe qu'un dialogue "c" suiveur entre le serveur d'application AS et la fonction SIF. La fonction SIF opère en mode B2BUA. Il est alors possible de faire sortir le serveur d'application AS de l'appel sans terminer ce dernier, en spécifiant l'information indiquant le désengagement de l'appel et la transmission de cette information par le serveur d'application AS dans un message SIP transmis dans le cadre du dialogue suiveur "c". L'opération de corrélation des dialogues "m" et "n" est exécutée de la même façon que dans les figures 12b et 12c.
De même, à tire d'exemple, le message BYE contenant un paramètre signifiant que le message précité est destiné à désengager le serveur d'application AS de l'appel peut être mis en oeuvre. Ce paramètre peut être contenu dans un nouvel en-tête spécifique ou dans un en-tête existant tel que le Call-Info mentionné précédemment.
Une description plus détaillée d'un serveur d'invocation d'un serveur d'application de service, conforme à l'objet de la présente invention, sera maintenant donnée en liaison avec la figure 13.
Ainsi que représenté sur la figure précitée, outre des organes d'entrée/sortie notés I/O, une unité centrale de traitement CPU, une mémoire de travail RAM et un module fonctionnel du type S-CSCF noté $M_0$ et comportant toutes les fonctions d'un serveur classique S-CSCF, le serveur d'appel objet de l'invention comporte avantageusement un module M1 de mémorisation de critères de filtrage de déclenchement conditionnel de services, critères SIC précédemment décrits dans la description, pouvant inclure l'état de l'agent utilisateur d'un terminal abonné demandé, le terminal B, lorsque le déclenchement est exécuté sur une requête initiale IR.
Le serveur d'appel d'invocation comporte, en outre, un module M de fonction d'invocation sélective de service incluant au moins la vérification de critères de déclenchement applicables à un agent utilisateur en fonction de sa position d'appelant, respectivement d'appelé. Le module M de fonction d'invocation sélective de service reçoit toutes les requêtes SIP initiales destinées à ou en provenance des agents utilisateurs des terminaux abonnés concernés par l'intermédiaire des organes d'entrée-sortie I/O. Il permet l'invocation d'au moins un serveur d'application de service AS en fonction de l'état de l'agent utilisateur du terminal d'abonné B. Le module de fonction d'invocation sélective de service porte la référence M sur la figure 13.
En outre, ainsi qu'on l'a représenté sur la figure précitée, le module M d'invocation sélective de service est subdivisé en un premier sous module M1 de traitement des messages SIP constitutifs d'une requête initiale. Le sous-module précité est un sous-module logiciel permettant d'exécuter le procédé objet de la présente invention et, en particulier, la fonction SIF telle que décrite en liaison avec la figure 5a et les figures suivantes précédemment dans la description.

Il comporte avantageusement un deuxième sous-module de traitement des messages SIP, sous-module M2, appartenant à un dialogue existant selon un mode opératoire transparent. Le sous-module M2 est également un module logiciel permettant l'exécution du traitement des messages M_SIP appartenant à un dialogue, tel que décrit précédemment dans la description en liaison avec la figure 5b et les figures suivantes.

Il comporte enfin, avantageusement, un troisième sous-module M3 de traitement des messages SIP appartenant à un dialogue existant selon un mode opératoire non transparent, ainsi que décrit en liaison avec la figure 10a précédemment dans la description. Grâce à l'introduction du sous-module M3, le nombre de messages échangés entre le module de fonction d'invocation sélective de service M et chaque serveur d'application est ainsi réduit, ainsi que mentionné dans la description. On comprend, en particulier, que les modules M2 et M3 peuvent être commutés de manière logicielle afin d'assurer le traitement des messages SIP, soit de façon transparente, soit de façon non transparente, selon le choix du gestionnaire du réseau SIP.

Enfin, l'invention couvre également un produit de programme d'ordinateur enregistré sur un support de mémorisation pour exécution par un ordinateur ou par un serveur d'appel dédié d'invocation tel que décrit en liaison avec la figure 13 précitée, particulièrement remarquable en ce que ce produit de programme d'ordinateur comporte des instructions permettant l'exécution du procédé selon les figures 5a, 5b, 10a et suivantes, précédemment décrites dans la description.

## Revendications

1. Procédé d'invocation d'au moins un serveur d'application de service (AS, AS1, AS2, AS3), lors d'une communication entre un agent utilisateur d'origine (A) et un agent utilisateur d'extrémité (B), tel qu'il comprend au moins les étapes consistant à :

    - ouvrir deux dialogues distincts (a, b), lesdits dialogues comprenant des messages, entre une fonction d'invocation sélective de service (SIF) et, respectivement, l'agent utilisateur d'origine (A) et l'agent utilisateur d'extrémité (B), la fonction d'invocation sélective de service (SIF) se substituant à l'agent utilisateur d'extrémité (B) dans son dialogue avec l'agent utilisateur d'origine (A) et à l'agent utilisateur d'origine (A) dans son dialogue avec l'agent utilisateur d'extrémité (B),
    - mémoriser au moins pour partie les messages provenant des agents utilisateurs lors des deux dialogues ouverts,
    - vérifier au moins un critère de déclenchement conditionnel de service sur les deux dialogues, et,
    - si le critère de déclenchement est vérifié, créer (216) au moins un troisième dialogue comprenant des messages entre ladite fonction d'invocation sélective de service (SIF) et le serveur d'application de service (AS, AS1, AS2, AS3), corréler ledit troisième dialogue avec les deux dialogues distincts selon une corrélation entre les dialogues et restituer dans le troisième dialogue au moins en partie les messages mémorisés au serveur d'application de service (AS, AS1, AS2, AS3) afin de déclencher l'invocation de celui-ci, à l'aide des deux dialogues distincts et dudit au moins un troisième dialogue corrélés,

    le procédé étant **caractérisé en ce que** si le critère de déclenchement est vérifié, la restitution dans le troisième dialogue est effectuée avant une transmission dans le premier (a) ou deuxième (b) dialogue du message qui a déclenché l'invocation du serveur d'application.

2. Procédé selon la revendication 1, **caractérisé en ce que** lesdits au moins un critère de déclenchement conditionnel de service incluent :

    - la réception d'une réponse à une requête initiale ;
    - l'expiration d'un délai de temporisation, mesurant la durée entre la réception d'une réponse provisoire et la non réception d'une réponse définitive ;
    - la réception d'une requête reçue dans un dialogue confirmé ;
    - la réception d'une requête reçue dans un dialogue non confirmé et
    - l'état de l'agent utilisateur d'extrémité.

3. Procédé selon l'une des revendications 1 et 2, **caractérisé en ce que** les deux dialogues (a, b) distincts ouverts sont des dialogues SIP.

**4.** Procédé selon l'une des revendications 1 à 3, dans lequel pour ouvrir les deux dialogues (a, b) distincts avec respectivement l'agent utilisateur d'origine (A) et l'agent utilisateur d'extrémité (B), la fonction d'invocation sélective de service (SIF) opère en mode B2BUA.

**5.** Procédé selon l'une des revendications 1 à 4, **caractérisé en ce que** si l'agent utilisateur d'origine (A) émet vers l'agent utilisateur d'extrémité (B) une requête initiale pour initier une transaction SIP, ladite fonction d'invocation sélective de service (SIF) détecte qu'il s'agit d'une requête initiale pour une simple transaction SIP et opère alors selon un mode classique d'invocation de serveur d'application, sans ouverture de deux dialogues distincts avec l'agent utilisateur d'origine (A) et l'agent utilisateur d'extrémité (B) respectivement.

**6.** Procédé selon l'une des revendications 1 à 5, **caractérisé en ce que** celui-ci consiste à exécuter ledit critère de déclenchement conditionnel et ladite fonction d'invocation sélective de service (SIF) dans un serveur d'appel SIP, constitué par un proxy S-CSCF.

**7.** Procédé selon l'une des revendications 1 à 5, **caractérisé en ce que** celui-ci consiste à exécuter ladite fonction d'invocation sélective de service (SIF) dans un serveur d'application spécifique.

**8.** Procédé selon l'une des revendications 1 à 7, dans lequel, en mode transparent vis-à-vis du serveur d'application de service (AS, AS1, AS2, AS3), la fonction d'invocation sélective de service (SIF) restitue au serveur d'application de service (AS, AS1, AS2, AS3) les messages mémorisés en simulant un dialogue réel entre l'agent utilisateur d'origine (A) et l'agent utilisateur d'extrémité (B).

**9.** Procédé selon l'une des revendications 1 à 7, dans lequel, en mode non transparent vis-à-vis du serveur d'application de service (AS, AS1, AS2, AS3), la fonction d'invocation sélective de service (SIF) restitue au serveur d'application de service (AS, AS1, AS2, AS3) les messages mémorisés en les délivrant par réplication et le serveur d'application de service (AS, AS1, AS2, AS3) reconstitue un dialogue réel entre l'agent utilisateur d'origine (A) et l'agent utilisateur d'extrémité (B).

**10.** Procédé selon l'une des revendications 1 à 9, **caractérisé en ce que**, pour désengager le serveur d'application de service (AS, AS1, AS2, AS3) invoqué avant la fin de la communication entre l'agent utilisateur d'origine (A) et l'agent utilisateur d'extrémité (B), ledit procédé comprend au moins les étapes de :

- transmission par ledit serveur d'application de service (AS, AS1, AS2, AS3) vers ladite fonction d'invocation sélective de service (SIF) d'une information de désengagement d'appel ; et, sur réception de ladite information de désengagement,
- terminaison par ladite fonction d'invocation sélective de service (SIF) du ou des dialogues établis avec ledit serveur d'application (AS, AS1, AS2, AS3);
- rétablissement de la corrélation entre les dialogues existants entre l'agent utilisateur d'origine (A) et ladite fonction d'invocation sélective de service (SIF), d'une part, et entre ladite fonction d'invocation sélective de service (SIF) et ledit agent utilisateur d'extrémité (B), d'autre part.

**11.** Serveur d'invocation sélective (SIF) d'au moins un serveur d'application de service (AS, AS1, AS2, AS3), tel qu'il comprend

- des moyens pour, lors d'une communication entre un agent utilisateur d'origine (A) et un agent utilisateur d'extrémité (B), ouvrir deux dialogues distincts (a, b) avec l'agent utilisateur d'origine (A) et l'agent utilisateur d'extrémité (B), respectivement, lesdits dialogues comprenant des messages, en se substituant à l'agent utilisateur d'extrémité (B) dans le dialogue avec l'agent utilisateur d'origine (A) et à l'agent utilisateur d'origine (A) dans le dialogue avec l'agent utilisateur d'extrémité (B),
- des moyens pour mémoriser au moins partiellement les messages provenant des agents utilisateurs lors des deux dialogues ouverts,
- des moyens pour vérifier au moins un critère de déclenchement conditionnel de service sur les deux dialogues (a, b),
- et des moyens pour restituer dans le troisième dialogue au moins en partie les messages mémorisés au serveur d'application de service (AS, AS1, AS2, AS3), si le critère de déclenchement est vérifié, afin de déclencher l'invocation du serveur d'application de service (AS, AS1, AS2, AS3), lesdits moyens étant aptes à créer au moins un troisième dialogue comprenant des messages entre ladite fonction d'invocation sélective de service (SIF) et le serveur d'application de service (AS, AS1, AS2, AS3), corréler ledit troisième dialogue avec les deux dialogues distincts selon une corrélation entre les dialogues et restituer au moins en partie les messages mémorisés au serveur d'application de service (AS, AS1, AS2, AS3) afin de déclencher l'invocation de celui-ci, à l'aide des deux dialogues distincts et dudit au moins un troisième dialogue corrélés,

le serveur d'invocation sélective étant **caractérisé en ce que** les moyens de restitution sont adaptés pour, si le critère de déclenchement est vérifié, effectuer la restitution dans le troisième dialogue avant une transmission dans le premier (a) ou deuxième (b) dialogue du message qui a déclenché l'invocation du serveur d'application.

**12.** Serveur d'invocation sélective (SIF) selon la revendication 11, dans lequel les moyens pour restituer les messages mémorisés sont agencés pour simuler un dialogue réel entre l'agent utilisateur d'origine (A) et l'agent utilisateur d'extrémité (B), le serveur opérant ainsi en mode transparent vis-à-vis du serveur d'application de service.

**13.** Serveur d'invocation sélective (SIF) selon la revendication 11, dans lequel les moyens pour restituer les messages mémorisés sont agencés pour délivrer les messages mémorisés par réplication, le serveur opérant ainsi en mode non transparent vis-à-vis du serveur d'application de service (AS, AS1, AS2, AS3).

**14.** Programme d'ordinateur pour un serveur d'invocation sélective de service, comprenant des instructions logicielles, qui lorsqu'elles sont exécutées par ledit serveur, amènent celui-ci à exécuter les étapes du procédé selon l'une des revendications 1 à 10.

## Patentansprüche

**1.** Verfahren zum Aufrufen mindestens eines Dienstanwendungsservers (AS, AS1, AS2, AS3) während einer Kommunikation zwischen einem Ausgangsbenutzeragenten (A) und einem Endbenutzeragenten (B), wobei dieses mindestens die folgenden Schritte umfasst:

- Öffnen von zwei distinktiven Dialogen (a, b), wobei die Dialoge Nachrichten umfassen, zwischen einer selektiven Dienstaufruffunktion (SIF) und jeweils dem Ausgangsbenutzeragenten (A) und dem Endbenutzeragenten (B), wobei sich die selektive Dienstaufruffunktion (SIF) bei dem Endbenutzeragenten (B) in seinen Dialog mit dem Ausgangsbenutzeragenten (A) und bei dem Ausgangsbenutzeragenten (A) in seinen Dialog mit dem Endbenutzeragenten (B) substituiert,
- mindestens teilweise Speichern der Nachrichten, die von den Benutzeragenten stammen, während der beiden offenen Dialoge,
- Verifizieren mindestens eines bedingten Dienstauslösekriteriums in den beiden Dialogen, und
- wenn das Auslösekriterium verifiziert wird, Erzeugen (216) mindestens eines dritten Dialogs, der Nachrichten umfasst, zwischen der selektiven Dienstaufruffunktion (SIF) und dem Dienstanwendungsserver (AS, AS1, AS2, AS3), Korrelieren des dritten Dialogs mit den beiden distinktiven Dialogen gemäß einer Korrelation zwischen den Dialogen und mindestens teilweise Wiederherstellen der in dem Dienstanwendungsserver (AS, AS1, AS2, AS3) gespeicherten Nachrichten in dem dritten Dialog, um den Aufruf desselben auszulösen, mit Hilfe der beiden distinktiven Dialoge und des mindestens einen dritten Dialogs, die korreliert sind,

wobei das Verfahren **dadurch gekennzeichnet ist, dass**, wenn das Auslösekriterium verifiziert wird, die Wiederherstellung in dem dritten Dialog vor einer Transmission der Nachricht in dem ersten (a) oder zweiten (b) Dialog durchgeführt wird, die den Aufruf des Anwendungsservers ausgelöst hat.

**2.** Verfahren nach Anspruch 1, **dadurch gekennzeichnet, dass** das mindestens eine bedingte Dienstauslösekriterium Folgendes umfasst:

- Empfang einer Antwort auf eine Initialanforderung;
- Ablauf einer Zeitverzögerung, welche die Dauer zwischen dem Empfang einer provisorischen Antwort und dem Nicht-Empfang einer definitiven Antwort misst;
- Empfang einer Anforderung, die in einem bestätigten Dialog empfangen wird;
- Empfang einer Anforderung, die in einem nicht-bestätigten Dialog empfangen wird, und
- Zustand des Endbenutzeragenten.

**3.** Verfahren nach einem der Ansprüche 1 und 2, **dadurch gekennzeichnet, dass** die beiden offenen distinktiven Dialoge (a, b) SIP-Dialoge sind.

4. Verfahren nach einem der Ansprüche 1 bis 3, wobei zum Öffnen der beiden distinktiven Dialoge (a, b) jeweils mit dem Ausgangsbenutzeragenten (A) und dem Endbenutzeragenten (B) die selektive Dienstaufruffunktion (SIF) in dem Modus B2BUA arbeitet.

5. Verfahren nach einem der Ansprüche 1 bis 4, **dadurch gekennzeichnet, dass**, wenn der Ausgangsbenutzeragent (A) an den Endbenutzeragenten (B) eine Initialanforderung zur Initiation einer SIP-Transaktion sendet, die selektive Dienstaufruffunktion (SIF) erfasst, dass es sich um eine Initialanforderung für eine einfache SIP-Transaktion handelt und daher in einem klassischen Modus zum Aufrufen eines Anwendungsservers arbeitet, ohne die beiden distinktiven Dialoge mit dem Ausgangsbenutzeragenten (A) bzw. dem Endbenutzeragenten (B) zu öffnen.

6. Verfahren nach einem der Ansprüche 1 bis 5, **dadurch gekennzeichnet, dass** dieses aus der Ausführung des bedingten Auslösekriteriums und der selektiven Dienstaufruffunktion (SIF) in einem SIP-Abrufserver besteht, der durch einen Proxy-S-CSCF gebildet wird.

7. Verfahren nach einem der Ansprüche 1 bis 5, **dadurch gekennzeichnet, dass** dieses aus der Ausführung der selektiven Dienstaufruffunktion (SIF) in einem anwendungsspezifischen Server besteht.

8. Verfahren nach einem der Ansprüche 1 bis 7, wobei, in einem transparenten Modus gegenüber dem Dienstanwendungsserver (AS, AS1, AS2, AS3), die selektive Dienstaufruffunktion (SIF) in dem Dienstanwendungsserver (AS, AS1, AS2, AS3) die gespeicherten Nachrichten wiederherstellt, indem ein reeller Dialog zwischen dem Ausgangsbenutzeragenten (A) und dem Endbenutzeragenten (B) simuliert wird.

9. Verfahren nach einem der Ansprüche 1 bis 7, wobei, in einem nicht-transparenten Modus gegenüber dem Dienstanwendungsserver (AS, AS1, AS2, AS3), die selektive Dienstaufruffunktion (SIF) in dem Dienstanwendungsserver (AS, AS1, AS2, AS3) die gespeicherten Nachrichten wiederherstellt, indem diese durch Replikation bereitgestellt werden und der Dienstanwendungsserver (AS, AS1, AS2, AS3) einen reellen Dialog zwischen dem Ausgangsbenutzeragenten (A) und dem Endbenutzeragenten (B) wiederherstellt.

10. Verfahren nach einem der Ansprüche 1 bis 9, **dadurch gekennzeichnet, dass** zur Trennung des aufgerufenen Dienstanwendungsservers (AS, AS1, AS2, AS3) vor dem Ende der Kommunikation zwischen dem Ausgangsbenutzeragenten (A) und dem Endbenutzeragenten (B) das Verfahren mindestens die folgenden Schritte umfasst:

- Senden, von dem Dienstanwendungsserver (AS, AS1, AS2, AS3) an die selektive Dienstaufruffunktion (SIF), einer Abruftrenninformation; und, beim Empfang der Trenninformation,
- Beendigung der selektiven Dienstaufruffunktion (SIF) des Dialogs oder der Dialoge, der oder die mit dem Anwendungsserver (AS, AS1, AS2, AS3) geführt wird oder werden;
- erneute Herstellung der Korrelation zwischen den bestehenden Dialogen einerseits zwischen dem Ausgangsbenutzeragenten (A) und der selektiven Dienstaufruffunktion (SIF) und andererseits zwischen der selektiven Dienstaufruffunktion (SIF) und dem Endbenutzeragenten (B).

11. Selektiver Aufruf(SIF)-server mindestens eines Dienstanwendungsservers (AS, AS1, AS2, AS3), umfassend:

- Mittel zum Öffnen von zwei distinktiven Dialogen (a, b) mit einem Ausgangsbenutzeragenten (A) bzw. einem Endbenutzeragenten (B) während einer Kommunikation zwischen dem Ausgangsbenutzeragenten (A) und dem Endbenutzeragenten (B), wobei die Dialoge Nachrichten umfassen, wobei diese sich bei dem Endbenutzeragenten (B) in den Dialog mit dem Ausgangsbenutzeragenten (A) und bei dem Ausgangsbenutzeragenten (A) in den Dialog mit dem Endbenutzeragenten (B) substituieren,
- Mittel zum mindestens teilweisen Speichern der Nachrichten, die von den Benutzeragenten stammen, während der beiden offenen Dialoge,
- Mittel zum Verifizieren mindestens eines bedingten Dienstauslösekriteriums in den beiden Dialogen (a, b), und
- Mittel zum mindestens teilweisen Wiederherstellen der in dem Dienstanwendungsserver (AS, AS1, AS2, AS3) gespeicherten Nachrichten in dem dritten Dialog, wenn das Auslösekriterium verifiziert wird, um den Aufruf des Dienstanwendungsservers (AS, AS1, AS2, AS3) auszulösen, wobei die Mittel ausgelegt sind, mindestens einen dritten Dialog, der Nachrichten umfasst, zwischen der selektiven Dienstaufruffunktion (SIF) und dem Dienstanwendungsserver (AS, AS1, AS2, AS3) zu erzeugen, den dritten Dialog mit den beiden distinktiven Dialogen gemäß einer Korrelation zwischen den Dialogen zu korrelieren und die in dem Dienstanwendungsserver (AS, AS1, AS2, AS3) gespeicherten Nachrichten, um den Aufruf desselben auszulösen, mit Hilfe der beiden distinktiven Dialoge und des mindestens einen dritten Dialogs, die korreliert sind, mindestens teilweise wiederherzustellen,

wobei der selektive Aufrufserver **dadurch gekennzeichnet ist, dass** die Wiederherstellungsmittel ausgelegt sind, wenn das Auslösekriterium verifiziert wird, die Wiederherstellung in dem dritten Dialog vor einer Transmission der Nachricht in dem ersten (a) oder zweiten (b) Dialog durchzuführen, die den Aufruf des Anwendungsservers ausgelöst hat.

**12.** Selektiver Aufruf(SIF)-server nach Anspruch 11, wobei die Mittel zum Wiederherstellen der gespeicherten Nachrichten ausgelegt sind, einen reellen Dialog zwischen dem Ausgangsbenutzeragenten (A) und dem Endbenutzeragenten (B) zu simulieren, wobei der Server so in dem transparenten Modus gegenüber dem Dienstanwendungsserver arbeitet.

**13.** Selektiver Aufruf(SIF)-server nach Anspruch 11, wobei die Mittel zum Wiederherstellen der gespeicherten Nachrichten ausgelegt sind, die gespeicherten Nachrichten durch Replikation bereitzustellen, wobei der Server so in dem nicht-transparenten Modus gegenüber dem Dienstanwendungsserver (AS, AS1, AS2, AS3) arbeitet.

**14.** Rechnerprogramm für einen selektiven Dienstaufrufserver, umfassend Software-Instruktionen, die, wenn sie von dem Server ausgeführt werden, diesen veranlassen, die Schritte des Verfahrens nach einem der Ansprüche 1 bis 10 auszuführen.

## Claims

**1.** Method of invoking at least one service application server (AS, AS1, AS2, AS3), in a communication between an origin user agent (A) and a terminal user agent (B), such that it comprises at least the steps consisting in:

- opening two separate dialogs (a, b), said dialogs comprising messages, between a selective service invocation function (SIF) and, respectively, the origin user agent (A) and the terminal user agent (B), the selective service invocation function (SIF) replacing the terminal user agent(B) in its dialog with the origin user agent (A) and replacing the origin user agent (A) in its dialog with the terminal user agent (B),
- at least partly storing the messages originating from the user agents in the two open dialogs,
- checking at least one conditional service triggering criterion on the two dialogs, and,
- if the triggering criterion is satisfied, creating (216) at least one third dialog comprising messages between said selective service invocation function (SIF) and the service application server (AS, AS1, AS2, AS3), correlating said third dialog with the two separate dialogs according to a correlation between the dialogs and at least partly restoring in the third dialog the stored messages to the service application server (AS, AS1, AS2, AS3) in order to trigger the invocation of the latter, using the two separate dialogs and said at least one third dialog, correlated together,

the method being **characterized in that** if the triggering criterion is satisfied, the restoration in the third dialog is performed before transmission in the first (a) or second (b) dialog of the message which has triggered the invocation of the application server.

**2.** Method according to Claim 1, **characterized in that** said at least one conditional service triggering criterion includes:

- reception of a response to an initial request;
- expiry of a time delay, measuring the duration between the reception of a provisional response and the non-reception of a final response;
- reception of a request received in a confirmed dialog;
- reception of a request received in an unconfirmed dialog, and,
- the state of the terminal user agent.

**3.** Method according to either of Claims 1 and 2, **characterized in that** the two separate open dialogs (a, b) are SIP dialogs.

**4.** Method according to one of Claims 1 to 3, in which, to open the two separate dialogs (a, b) with, respectively, the origin user agent (A) and the terminal user agent (B), the selective service invocation function (SIF) works in B2BUA mode.

5. Method according to one of Claims 1 to 4, **characterized in that**, if the origin user agent (A) sends the terminal user agent (B) an initial request to initiate an SIP transaction, said selective service invocation function (SIF) detects that it is an initial request for a simple SIP transaction and then works in a conventional application server invocation mode, without opening two separate dialogs with the origin user agent (A) and the terminal user agent (B) respectively.

6. Method according to one of Claims 1 to 5, **characterized in that** the latter consists in executing said conditional triggering criterion and said selective service invocation function (SIF) in an SIP call server, comprising a proxy S-CSCF.

7. Method according to one of Claims 1 to 5, **characterized in that** the latter consists in executing said selective service invocation function (SIF) in a specific application server.

8. Method according to one of Claims 1 to 7, in which, in transparent mode with respect to the service application server (AS, AS1, AS2, AS3), the selective service invocation function (SIF) restores to the service application server (AS, AS1, AS2, AS3) the stored messages by simulating a real dialog between the origin user agent (A) and the terminal user agent (B).

9. Method according to one of Claims 1 to 7, in which, in non-transparent mode with respect to the service application server (AS, AS1, AS2, AS3), the selective service invocation function (SIF) restores to the service application server (AS, AS1, AS2, AS3) the stored messages by delivering them by replication and the service application server (AS, AS1, AS2, AS3) reconstructs a real dialog with the origin user agent (A) and the terminal user agent (B).

10. Method according to one of Claims 1 to 9, **characterized in that**, to disengage the invoked service application server (AS, AS1, AS2, AS3) before the end of the communication between the origin user agent (A) and the terminal user agent (B), said method comprises at least the following steps:

- transmission by said service application server (AS, AS1, AS2, AS3) to said selective service invocation function (SIF) of call disengagement information; and, on receipt of said disengagement information,
- termination by said selective service invocation function (SIF) of the dialog or dialogs set up with said application server (AS, AS1, AS2, AS3);
- recreation of the correlation between the dialogs existing between the origin user agent (A) and said selective service invocation function (SIF), on the one hand, and between said selective service invocation function (SIF) and said terminal user agent (B), on the other hand.

11. Selective invocation server (SIF) for at least one service application server (AS, AS1, AS2, AS3), such that it comprises

- means for, in a communication between an origin user agent (A) and a terminal user agent (B), opening two separate dialogs (a, b) with the origin user agent (A) and the terminal user agent (B), respectively, said dialogs comprising messages, by replacing the terminal user agent (B) in the dialog with the origin user agent (A) and replacing the origin user agent (A) in the dialog with the terminal user agent (B),
- means for at least partially storing the messages originating from the user agents in the two open dialogs,
- means for verifying at least one conditional service triggering criterion on the two dialogs (a, b),
- and means for at least partly restoring in the third dialog the stored messages to the service application server (AS, AS1, AS2, AS3), if the triggering criterion is satisfied, in order to trigger the invocation of the service application server, said means being able to create at least one third dialog comprising messages between said selective service invocation function (SIF) and the service application server (AS, AS1, AS2, AS3), correlating said third dialog with the two separate dialogs according to a correlation between the dialogs and at least partly restoring the stored messages to the service application server (AS, AS1, AS2, AS3) in order to trigger the invocation of the latter, using the two separate dialogs and said at least one third dialog, correlated together, the selective invocation server being **characterized in that**
the restoring means are designed so as, if the triggering criterion is satisfied, to perform the restoration in the third dialog before transmission in the first (a) or second (b) dialog of the message which has triggered the invocation of the application server.

12. Selective invocation server (SIF) according to Claim 11, in which the means for restoring the stored messages are arranged to simulate a real dialog between the origin user agent (A) and the terminal user agent (B), the server thus working in transparent mode with respect to the service application server.

**13.** Selective invocation server (SIF) according to Claim 11, in which the means for restoring the stored messages are arranged to deliver the stored messages by replication, the server thus working in non-transparent mode with respect to the service application server (AS, AS1, AS2, AS3).

**14.** Computer program for a selective service invocation server, comprising software instructions which, when executed by said server, lead the latter to execute the steps of the method according to one of Claims 1 to 10.

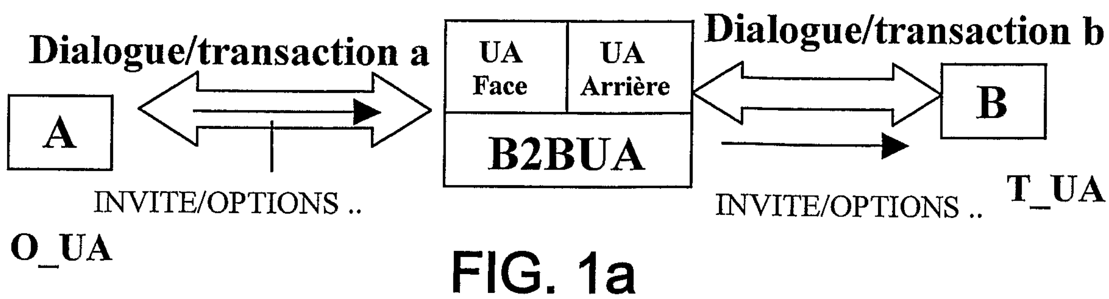


FIG. 1a
(ART ANTÉRIEUR)

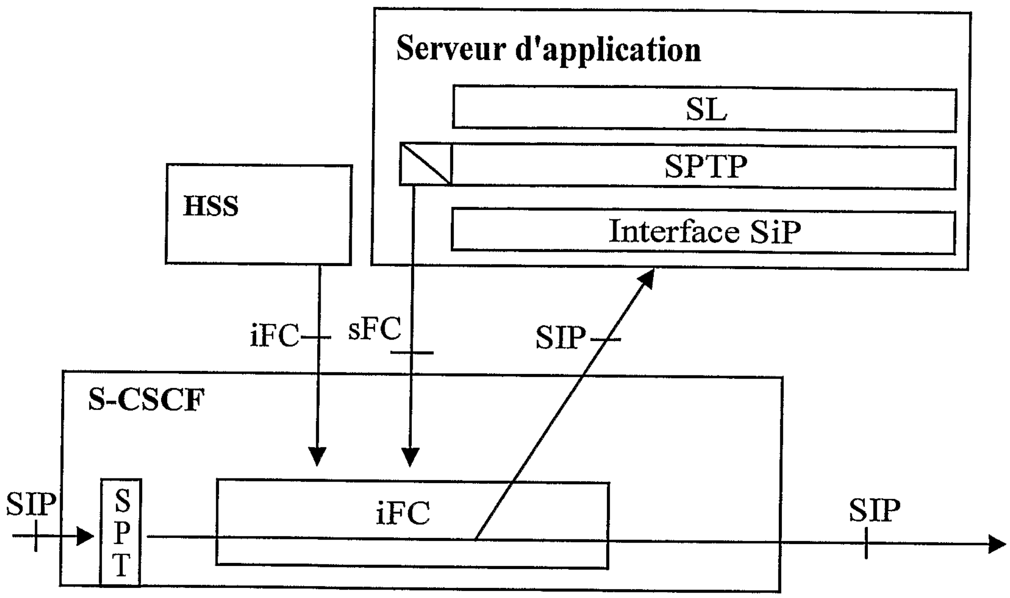


FIG. 1b
(ART ANTÉRIEUR)

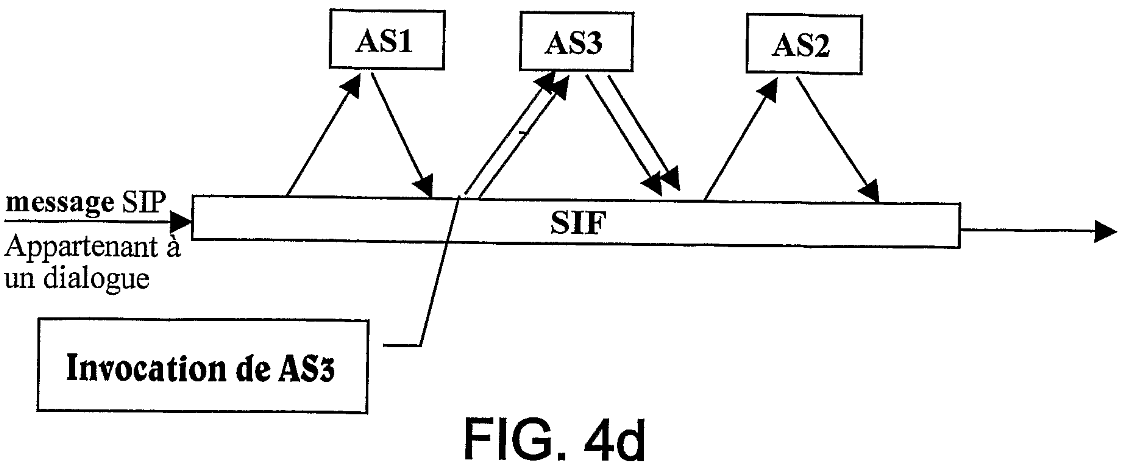


FIG. 4d

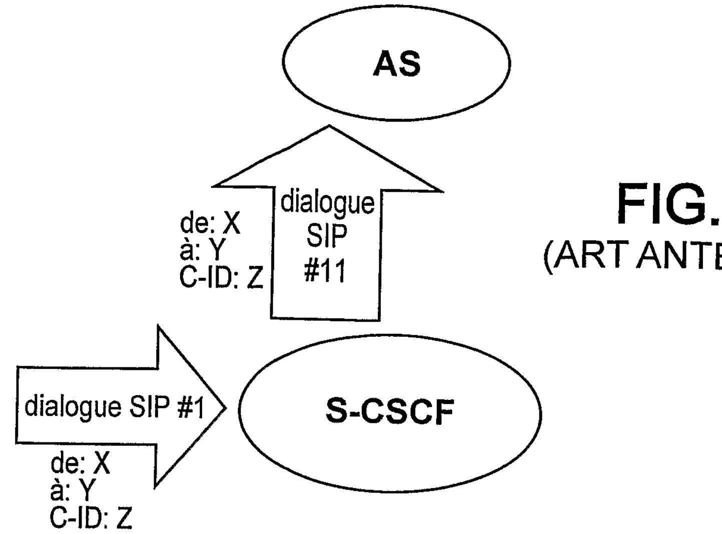


FIG. 1c
(ART ANTÉRIEUR)

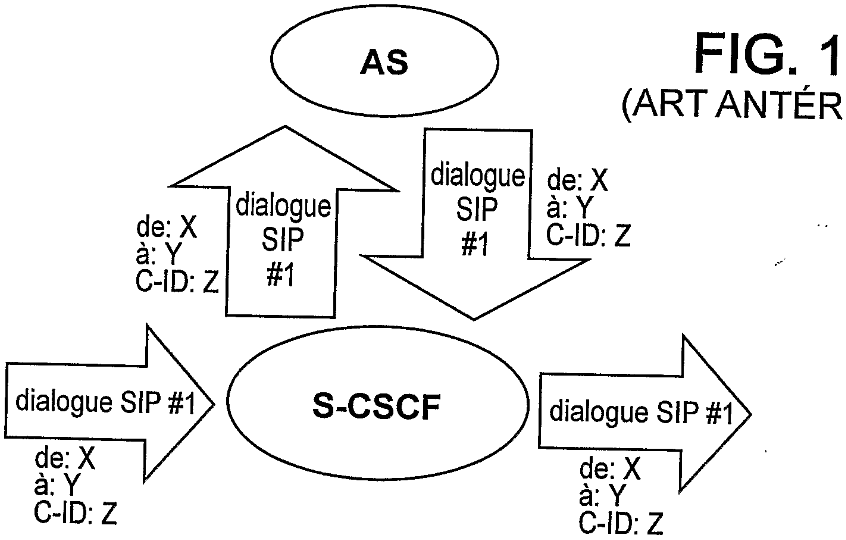


FIG. 1d
(ART ANTÉRIEUR)

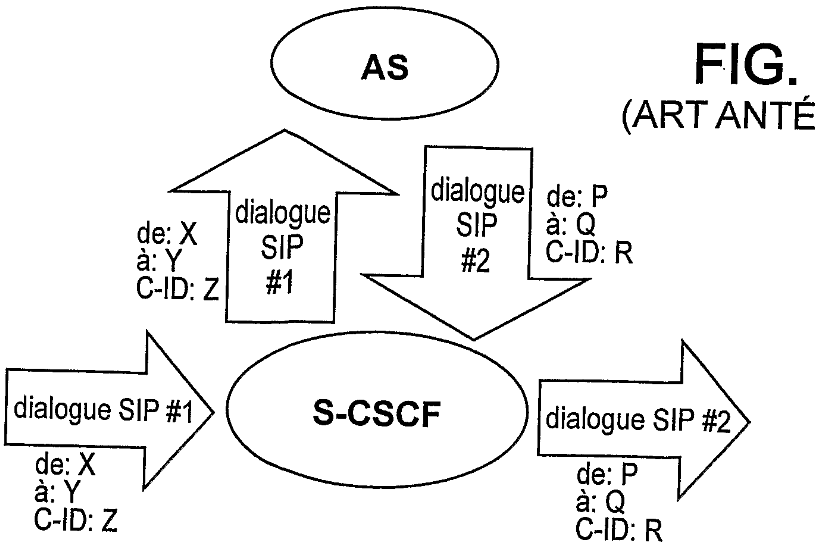


FIG. 1e
(ART ANTÉRIEUR)

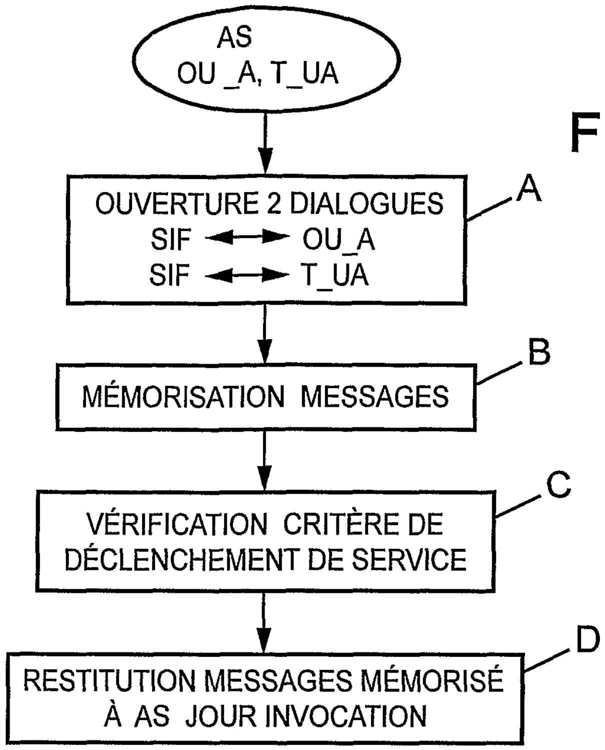


FIG. 2a

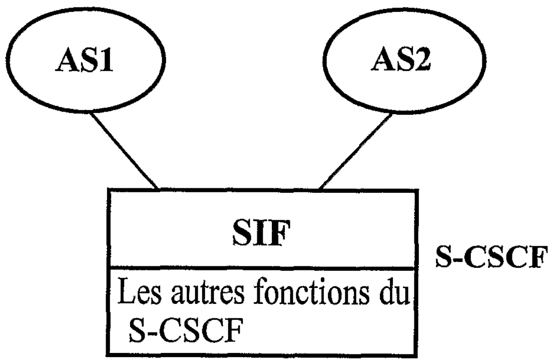


FIG. 2b

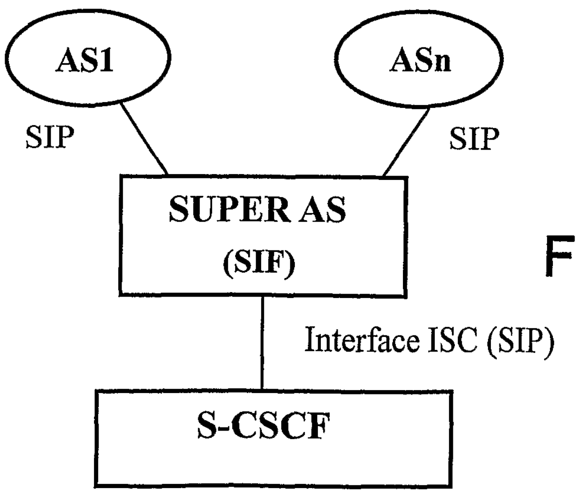


FIG. 2c

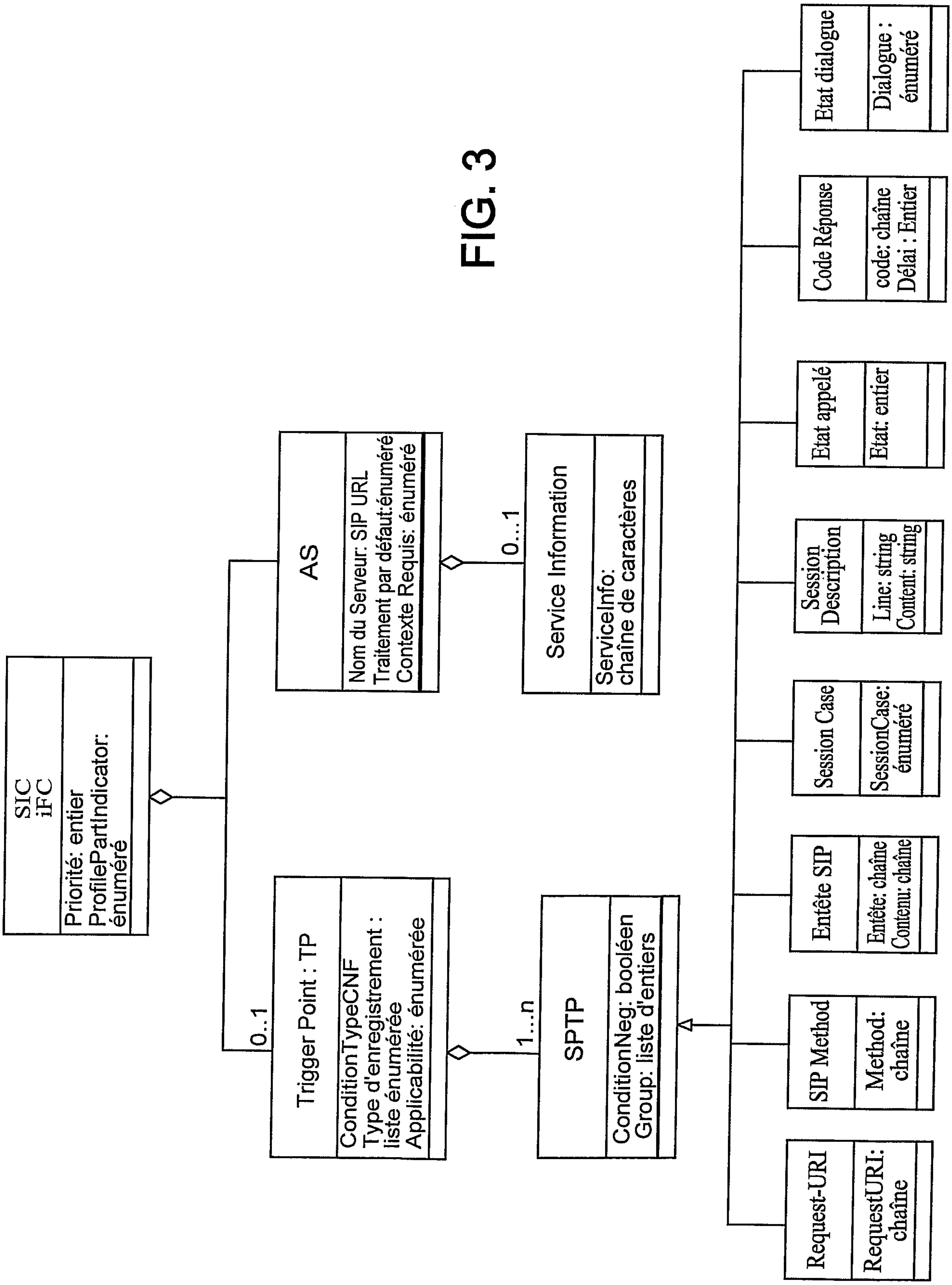
SIC
iFC
Priorité: entier
ProfilePartIndicator: énuméré
AS
Nom du Serveur: SIP URL
Traitement par défaut:énuméré
Contexte Requis: énuméré
0...1
Service Information
ServiceInfo: chaîne de caractères
0..1
Trigger Point : TP
ConditionTypeCNF
Type d'enregistrement : liste énumérée
Applicabilité: énumérée
1...n
SPTP
ConditionNeg: booléen
Group: liste d'entiers
Request-URI
RequestURI: chaîne
SIP Method
Method: chaîne
Entête SIP
Entête: chaîne
Contenu: chaîne
Session Case
SessionCase: énuméré
Session Description
Line: string
Content: string
Etat appelé
Etat: entier
Code Réponse
code: chaîne
Délai : Entier
Etat dialogue
Dialogue : énuméré

FIG. 3

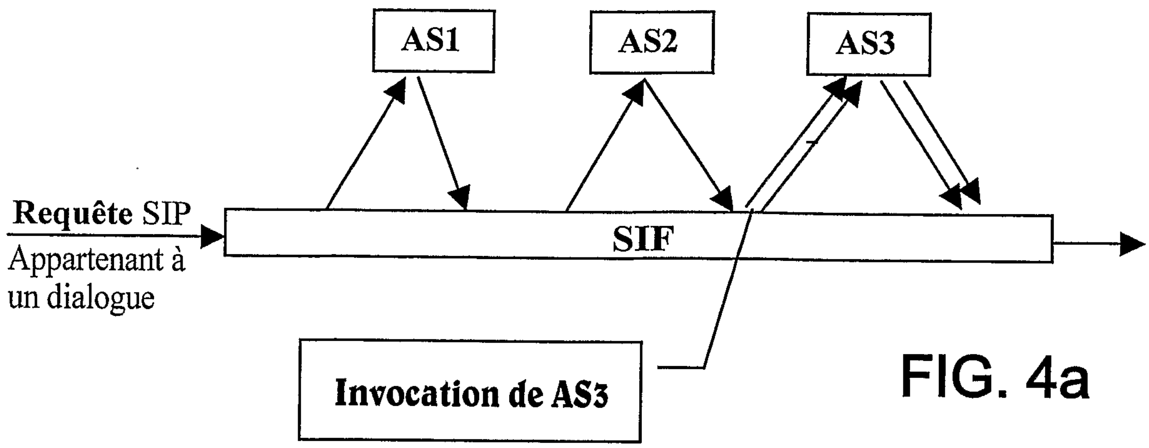


FIG. 4a

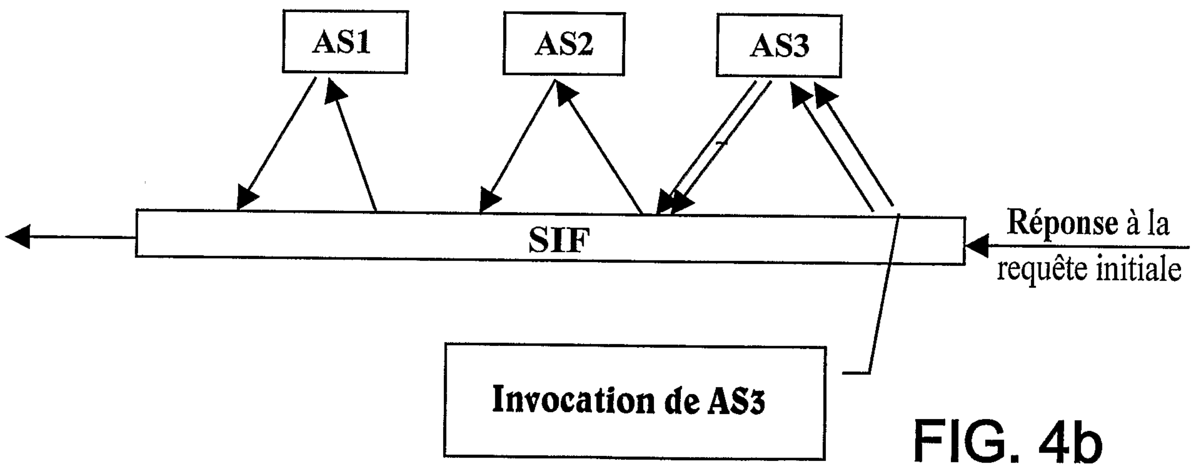


FIG. 4b

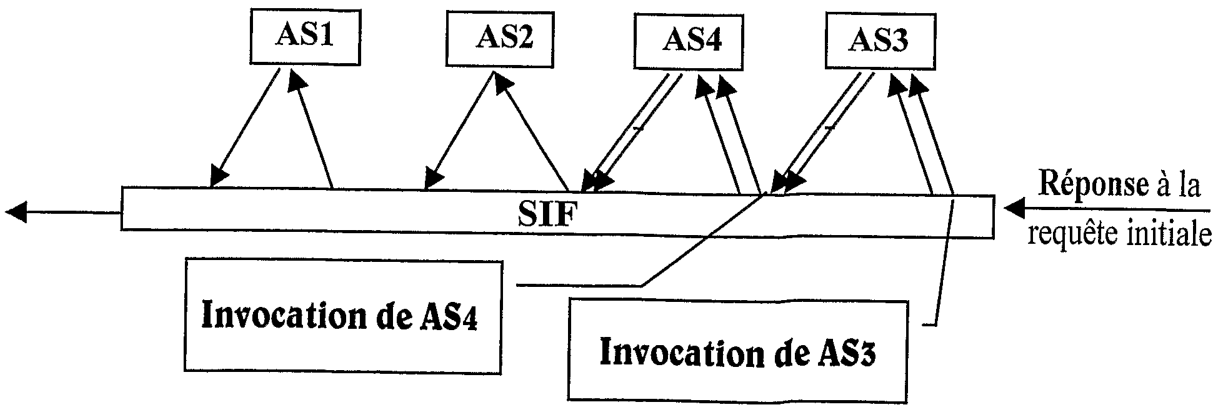


FIG. 4c

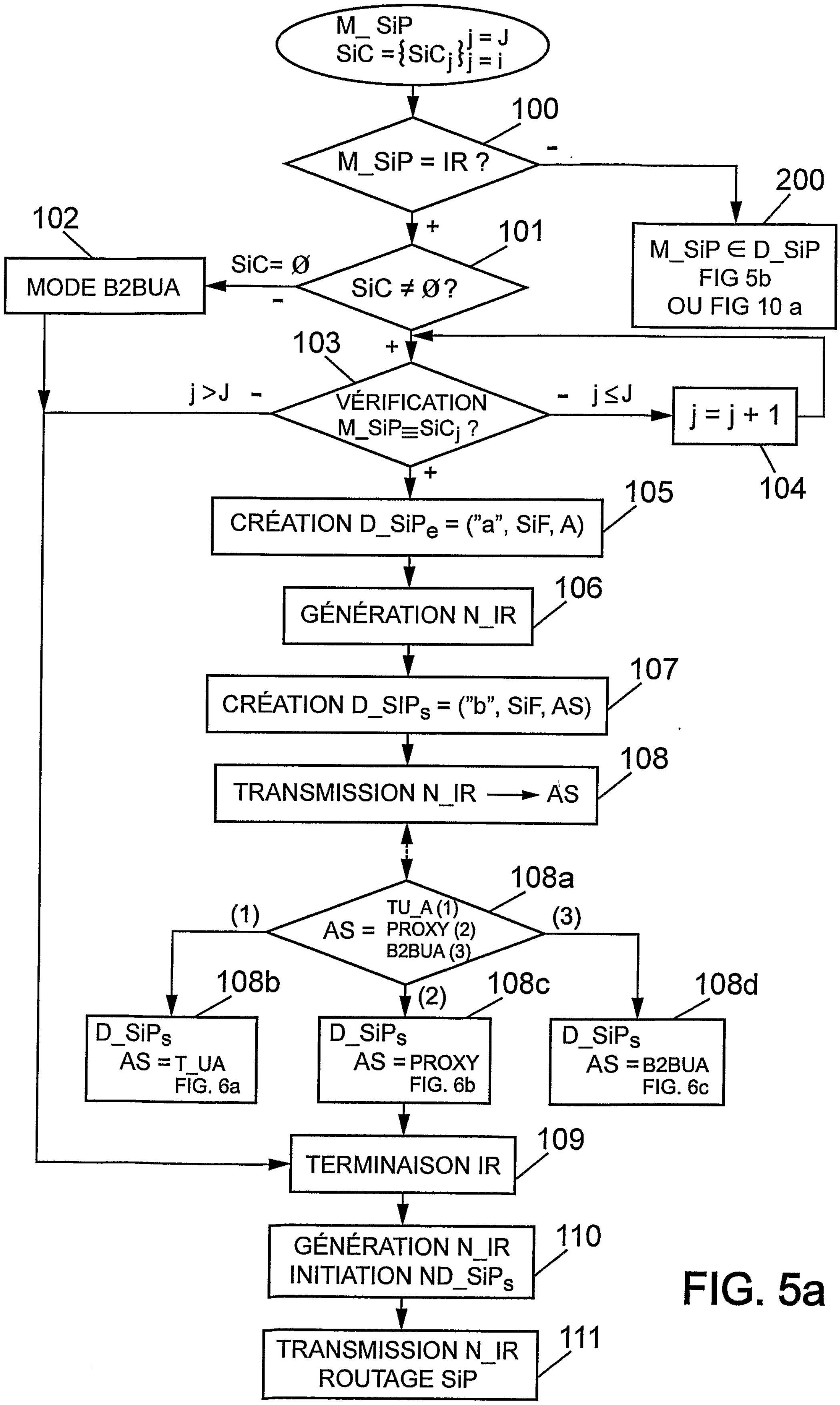
M_ SiP
SiC = {SiCj} j = i, j = J
100
M_SiP = IR ?
-
+
200
M_SiP ∈ D_SiP
FIG 5b
OU FIG 10 a
102
MODE B2BUA
SiC= Ø
-
101
SiC ≠ Ø ?
103
+
VÉRIFICATION
M_SiP≡SiCj ?
j >J -
- j ≤ J
j = j + 1
104
+
105
CRÉATION D_SiPe = ("a", SiF, A)
106
GÉNÉRATION N_IR
107
CRÉATION D_SIPs = ("b", SiF, AS)
108
TRANSMISSION N_IR → AS
108a
AS = TU_A (1) PROXY (2) B2BUA (3)
(1)
(2)
(3)
108b
D_SiPs
AS = T_UA
FIG. 6a
108c
D_SiPs
AS = PROXY
FIG. 6b
108d
D_SiPs
AS = B2BUA
FIG. 6c
109
TERMINAISON IR
110
GÉNÉRATION N_IR
INITIATION ND_SiPs
111
TRANSMISSION N_IR
ROUTAGE SiP

FIG. 5a

FIG. 5b

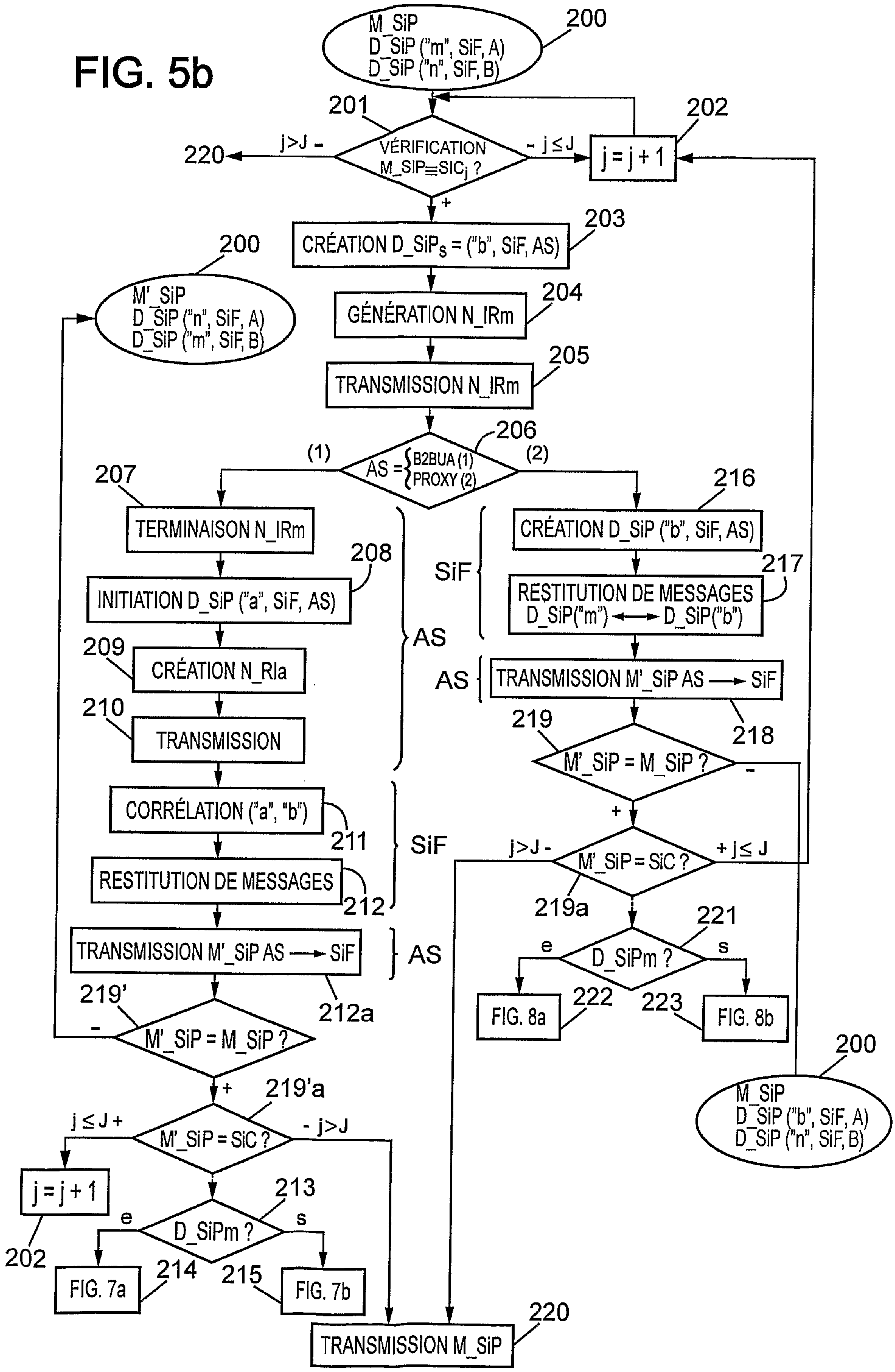

200
M_SiP
D_SiP ("m", SiF, A)
D_SiP ("n", SiF, B)
201
VÉRIFICATION
M_SIP≡SICj ?
j>J -
- j≤J
220
202
j = j + 1
+
203
CRÉATION D_SiPs = ("b", SiF, AS)
204
GÉNÉRATION N_IRm
205
TRANSMISSION N_IRm
206
AS = B2BUA (1) PROXY (2)
(1)
(2)
200
M' SiP
D_SiP ("n", SiF, A)
D_SiP ("m", SiF, B)
207
TERMINAISON N_IRm
208
INITIATION D_SiP ("a", SiF, AS)
209
CRÉATION N_RIa
210
TRANSMISSION
AS
CORRÉLATION ("a", "b")
211
RESTITUTION DE MESSAGES
212
SiF
TRANSMISSION M'_SiP AS → SiF
AS
212a
219'
M'_SiP = M_SiP ?
-
+
219'a
M'_SiP = SiC ?
j≤J +
- j>J
j = j + 1
202
213
D_SiPm ?
e
s
FIG. 7a
214
215
FIG. 7b
216
CRÉATION D_SiP ("b", SiF, AS)
SiF
217
RESTITUTION DE MESSAGES
D_SiP("m") ↔ D_SiP("b")
AS
TRANSMISSION M'_SiP AS → SiF
218
219
M'_SiP = M_SiP ?
-
+
j>J -
+ j≤ J
M'_SiP = SiC ?
219a
221
D_SiPm ?
e
s
FIG. 8a
222
223
FIG. 8b
200
M_SiP
D_SiP ("b", SiF, A)
D_SiP ("n", SiF, B)
220
TRANSMISSION M_SiP

FIG. 6a

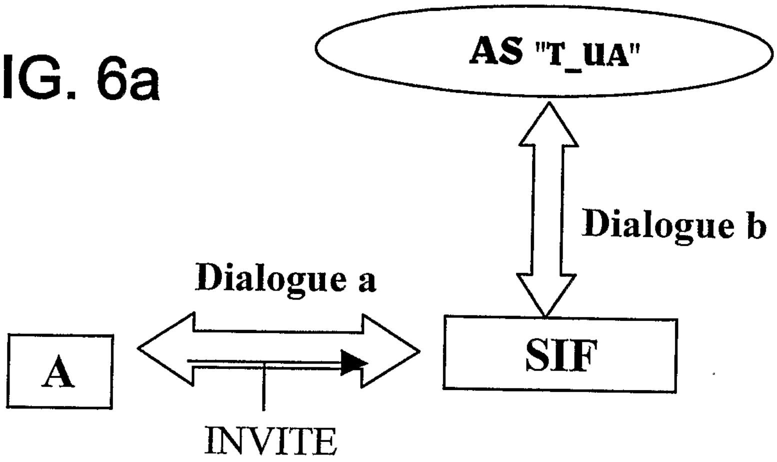


FIG. 6b

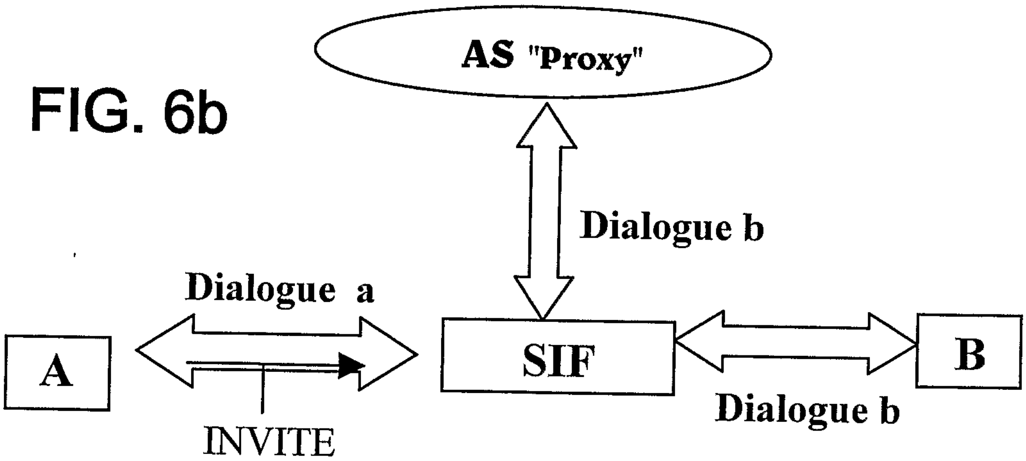


FIG. 6c

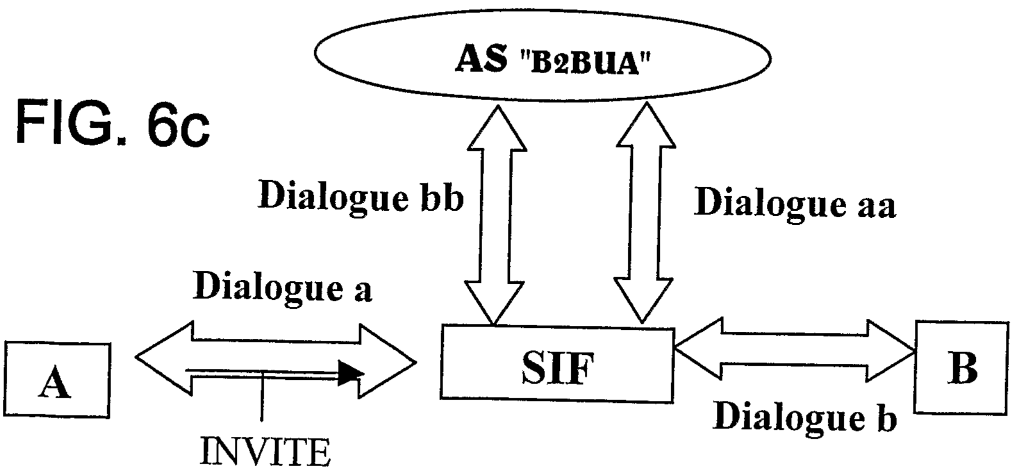

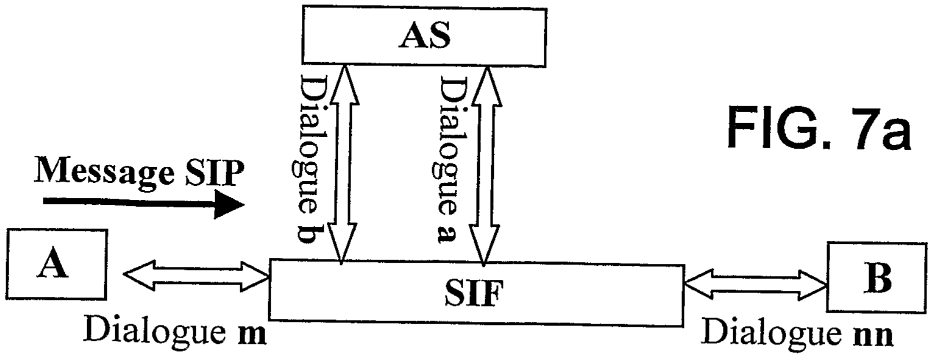


FIG. 7a

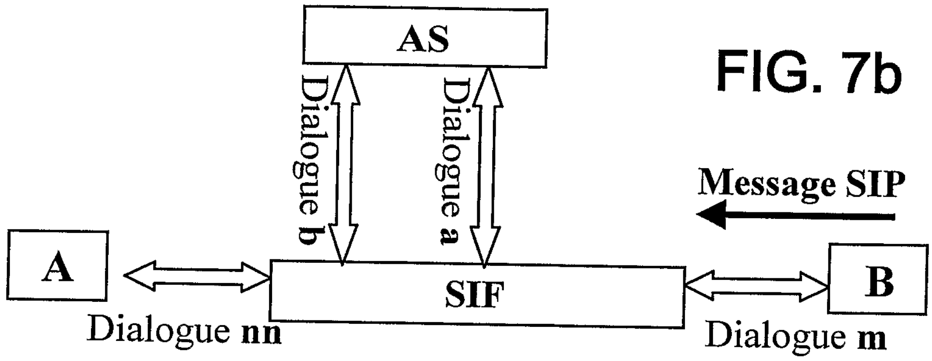


FIG. 7b

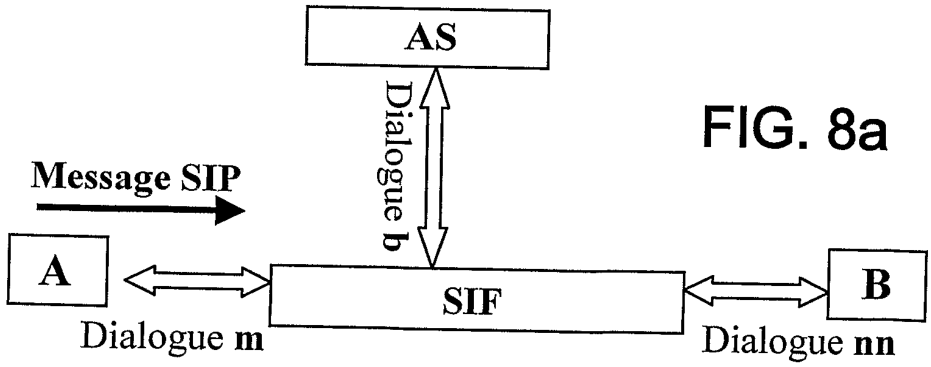


FIG. 8a

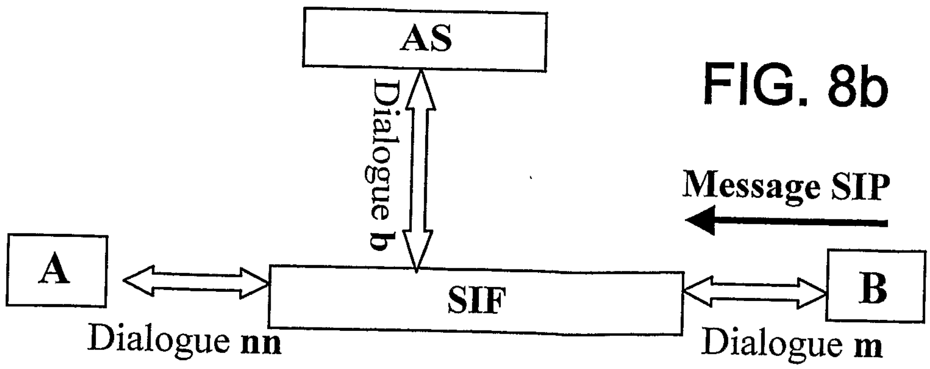


FIG. 8b

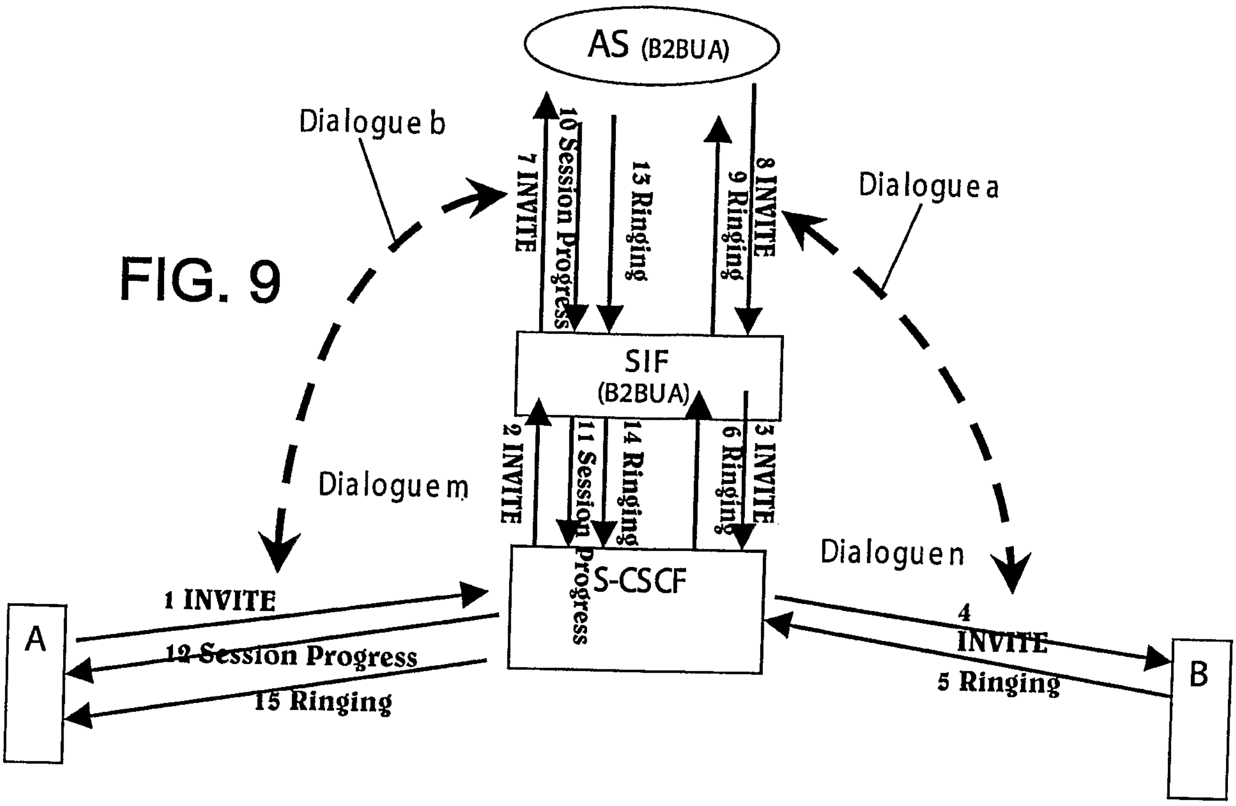
AS (B2BUA)
Dialogue b
Dialogue a
7 INVITE
10 Session Progress
13 Ringing
8 INVITE
9 Ringing
SIF
(B2BUA)
2 INVITE
11 Session Progress
14 Ringing
6 Ringing
3 INVITE
Dialogue m
Dialogue n
S-CSCF
1 INVITE
12 Session Progress
15 Ringing
A
4
INVITE
5 Ringing
B

FIG. 9

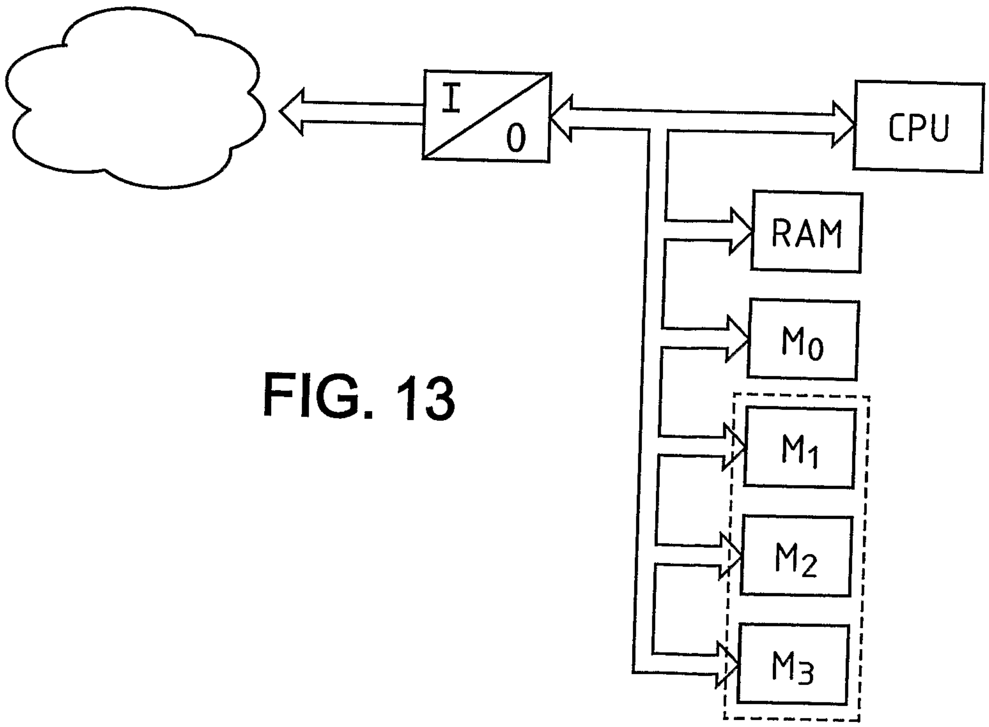
I
0
CPU
RAM
M0
M1
M2
M3

FIG. 13

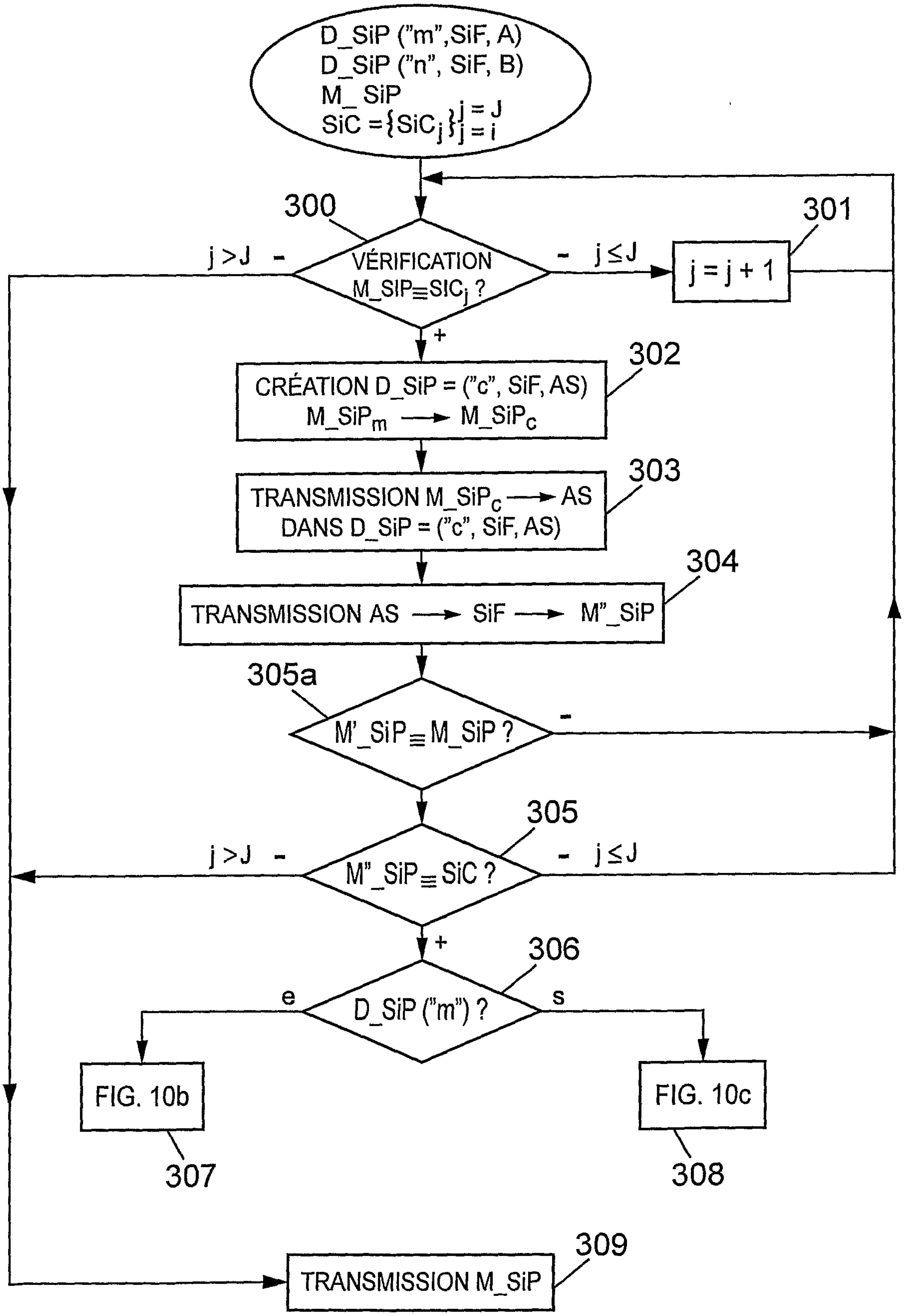
D_SiP ("m",SiF, A)
D_SiP ("n", SiF, B)
M_ SiP
SiC ={SiCj} j = J j = i
300
VÉRIFICATION M_SIP≡SICj ?
j >J -
- j≤J
j = j + 1
301
+
CRÉATION D_SiP = ("c", SiF, AS) M_SiPm → M_SiPc
302
TRANSMISSION M_SiPc → AS DANS D_SiP = ("c", SiF, AS)
303
TRANSMISSION AS → SiF → M"_SiP
304
305a
M'_SiP≡M_SiP ?
-
305
M"_SiP≡SiC ?
j >J -
- j≤J
+
306
D_SiP ("m") ?
e
s
FIG. 10b
307
FIG. 10c
308
TRANSMISSION M_SiP
309

FIG. 10a

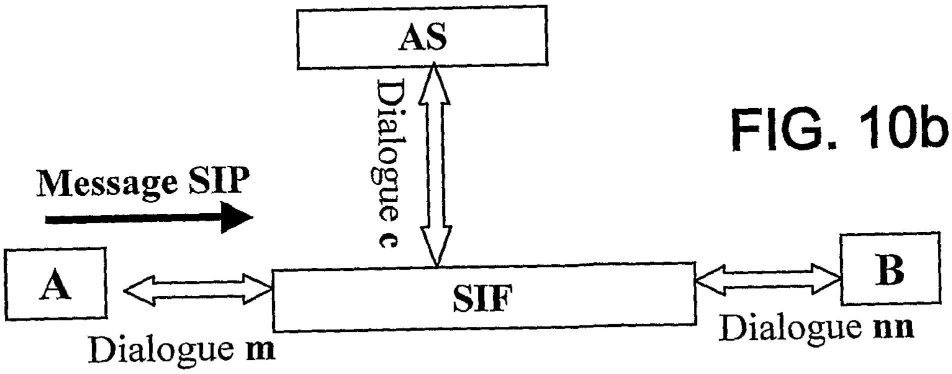


FIG. 10b

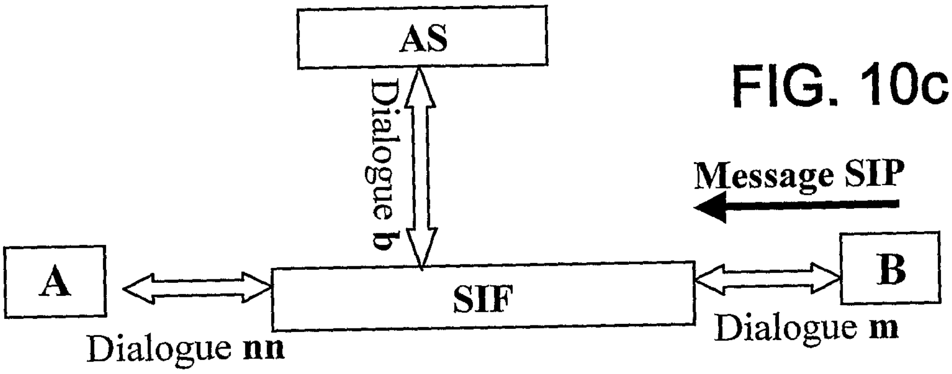


FIG. 10c

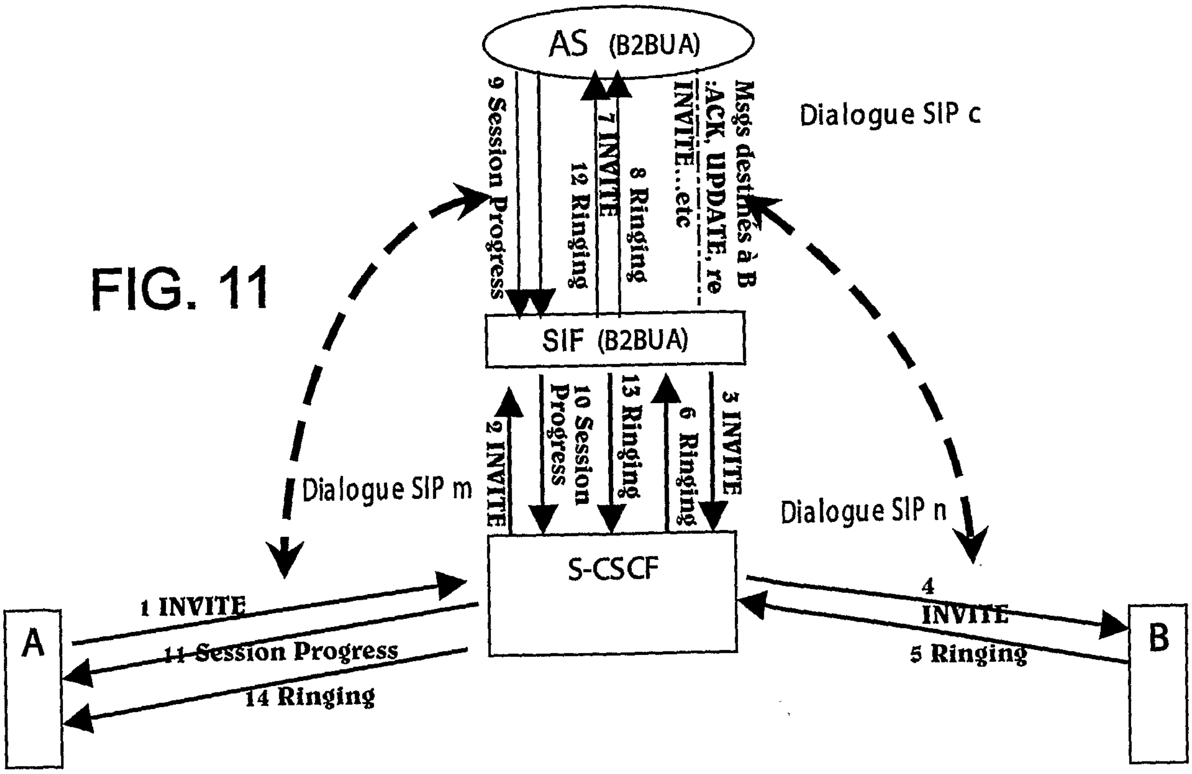


FIG. 11

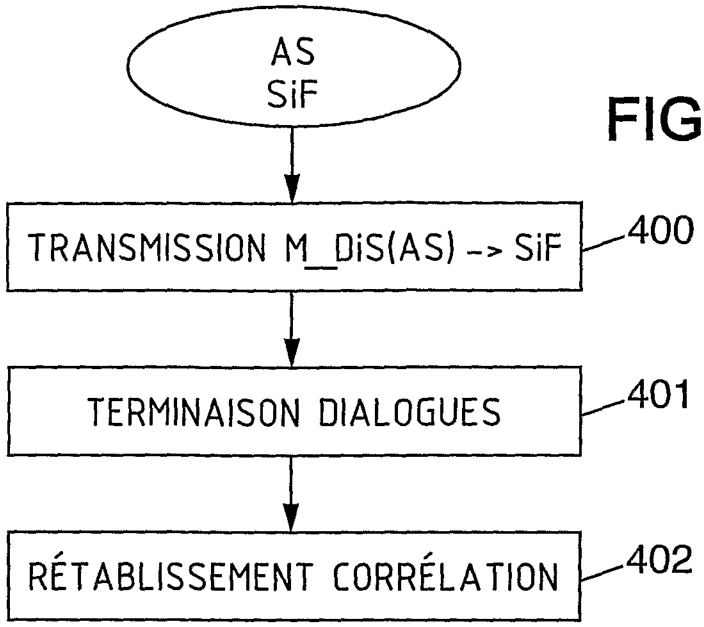


FIG. 12a

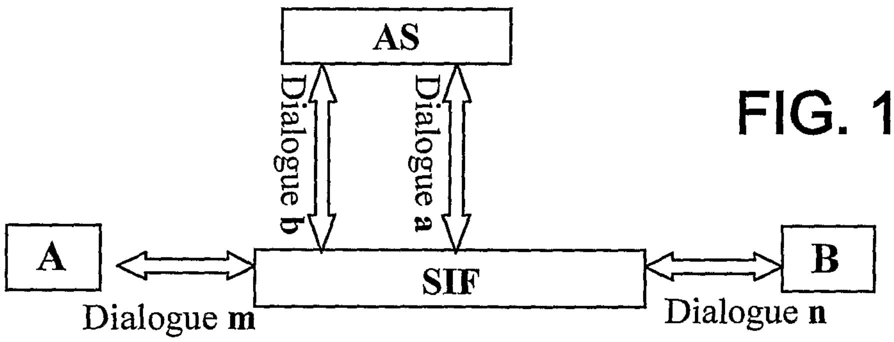


FIG. 12b

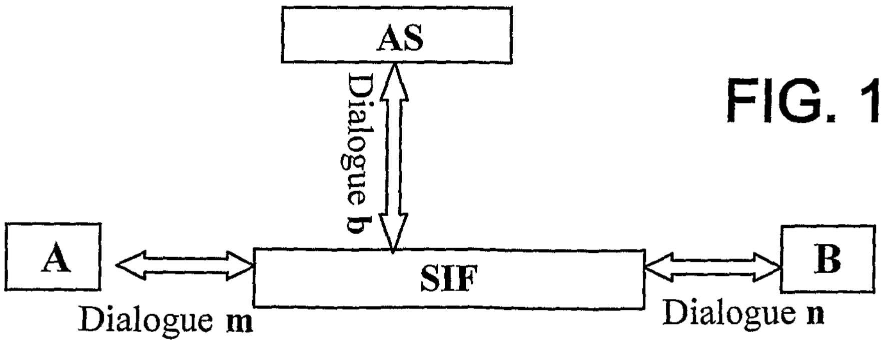


FIG. 12c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2005190772 A